# EUROPEAN PATENT APPLICATION

(11) **EP 4 521 684 A1**
(43) Date of publication of application: **12.03.2025**
(21) Application number: 23806843.1
(22) Date of filing: 12.05.2023
(51) Int. Cl.: H04L 9/32

(54) **SECURE COMMUNICATION METHOD AND APPARATUS**

(30) Priority: 16.05.2022 CN 202210531225
(71) Applicant: Huawei Technologies Co., Ltd., Shenzhen, Guangdong 518129 (CN)
(72) Inventor: SUN, Taoran, Shenzhen, Guangdong 518129 (CN); WU, Yizhuang, Shenzhen, Guangdong 518129 (CN); LI, Lun, Shenzhen, Guangdong 518129 (CN); CUI, Yang, Shenzhen, Guangdong 518129 (CN); LEI, Ao, Shenzhen, Guangdong 518129 (CN)
(74) Representative: Maiwald GmbH
(86) International application number: PCT/CN2023/093845
(87) International publication number: WO 2023/221891

(57) **Abstract**

A secure communication method and an apparatus are provided. The method includes: A network management network element signs first information to obtain a first signature, and sends the first signature to a first network element, where the first information is used to obtain a first certificate that can prove an identity of the first network element. The first network element sends the first information and the first signature to a certificate authority to request the first certificate. The certificate authority verifies the first signature based on a private key of the network management network element and the first information to determine whether the first network element impersonates or tampers with the first information. When the verification succeeds, the certificate authority sends the first certificate to the first network element. In the foregoing solutions, a problem that the first network element can still apply for the first certificate when the first network element impersonates or tampers with the first information can be reduced, improving communication security of the first network element.

## Description

This application claims priority to Chinese Patent Application No. 202210531225.4, filed with the China National Intellectual Property Administration on May 16, 2022 and entitled "SECURE COMMUNICATION METHOD AND APPARATUS", which is incorporated herein by reference in its entirety.

### TECHNICAL FIELD

This application relates to the communication field and the wireless communication field, and more specifically, to a secure communication method and an apparatus.

### BACKGROUND

Before communicating with each other, two network elements authenticate each other's identity by verifying each other's certificate to improve communication security. Therefore, how to improve security of this authentication manner to improve security of communication between network elements becomes an urgent problem to be resolved.

### SUMMARY

This application provides a secure communication method and an apparatus to improve communication security.

According to a first aspect, a secure communication method is provided. The method may be performed by a first network element, or may be performed by a component (for example, a chip or a circuit) of a first network element. This is not limited in this application. For ease of description, an example in which the method is performed by the first network element is used below for description.

The method may include: The first network element receives first information and a first signature from a network management network element, where the first signature is generated based on a private key of the network management network element and the first information, and the first information is used to describe the first network element; the first network element sends the first information and the first signature to a certificate issuing network element, where the first information is used to obtain a first certificate, and the first certificate is used to prove an identity of the first network element; and the first network element receives the first certificate from the certificate issuing network element.

In the foregoing solution, when requesting the certificate from the certificate issuing network element, the first network element sends the first signature generated by the network management network element. The certificate issuing network element verifies the first signature to determine whether the first network element impersonates or tampers with the first information. In this way, a problem that the first network element can still apply for the first certificate when the first network element impersonates or tampers with the first information can be reduced, improving communication security of the first network element.

In a possible implementation, the first network element sends the first information and the first signature to the network management network element, and the network management network element is configured to forward the first information and the first signature to the certificate issuing network element; and the first network element receives the first certificate from the network management network element, and the network management network element is configured to forward the first certificate for the certificate issuing network element.

With reference to the first aspect, in some implementations of the first aspect, the first certificate includes the first information.

With reference to the first aspect, in some implementations of the first aspect, the method further includes: The first network element sends first indication information to the certificate issuing network element, where the first indication information is used to obtain information used to verify the first signature.

With reference to the first aspect, in some implementations of the first aspect, the method further includes: The first network element sends a type of the first certificate to the certificate issuing network element.

With reference to the first aspect, in some implementations of the first aspect, the method further includes: The first network element sends a public key of the first network element to the certificate issuing network element.

With reference to the first aspect, in some implementations of the first aspect, the first information includes at least one of the following: a first instance identifier, a first type, a first fully qualified domain name, a first internet protocol address, a first public land mobile network identifier, or a first network slice identifier. The first instance identifier identifies the first network element. The first type indicates a type of the first network element. The first fully qualified domain name or the first internet protocol address indicates an address of the first network element. The public land mobile network identifier indicates a network area in which the first network element is located. The first network slice identifier indicates a network slice on which the first network element is located.

With reference to the first aspect, in some implementations of the first aspect, the method further includes: The first network element obtains second information, where the second information includes at least one of the following: an identifier of the certificate issuing network element or first duration, the identifier of the certificate issuing network element is used to send the first information and the first signature to the certificate issuing network element, and the first duration indicates a validity period of the first certificate.

With reference to the first aspect, in some implementations of the first aspect, the second information further includes the type of the first certificate and the first indication information.

With reference to the first aspect, in some implementations of the first aspect, the method further includes: The first network element sends the second information to the certificate issuing network element.

With reference to the first aspect, in some implementations of the first aspect, the second information is received from the network management network element, and that the first signature is generated based on a private key of the network management network element and the first information includes: The first signature is generated based on the private key of the network management network element, the first information, and the second information.

With reference to the first aspect, in some implementations of the first aspect, the method further includes: The first network element receives a second signature from the network management network element, where the second signature is generated based on the private key of the network management network element and the second information; and the first network element sends the second signature to the certificate issuing network element.

With reference to the first aspect, in some implementations of the first aspect, the method further includes: The first network element sends second indication information to the certificate issuing network element, where the second indication information is used to obtain information used to verify the second signature.

With reference to the first aspect, in some implementations of the first aspect, that the first network element sends the first information and the first signature to a certificate issuing network element includes: The first network element sends the first information and the first signature to the certificate issuing network element based on the identifier of the certificate issuing network element.

With reference to the first aspect, in some implementations of the first aspect, the method further includes: The first network element receives third information and a third signature from the network management network element, where the third signature is generated based on the private key of the network management network element and the third information, and the third information is used to describe the first network element; the first network element sends the third information and the third signature to the certificate issuing network element, where the third information is used to obtain a second certificate, and the second certificate is used to prove the identity of the first network element; and the first network element receives the second certificate from the certificate issuing network element.

With reference to the first aspect, in some implementations of the first aspect, the method further includes: The first network element sends a cause value to the certificate issuing network element, where the cause value indicates that the first information is updated.

With reference to the first aspect, in some implementations of the first aspect, the third information may be updated first information, or may be an updated parameter in the first information.

According to a second aspect, a secure communication method is provided. The method may be performed by a network management network element, or may be performed by a component (for example, a chip or a circuit) of a network management network element. This is not limited in this application. For ease of description, an example in which the method is performed by the network management network element is used below for description.

The method may include: The network management network element generates first information, where the first information is used to describe a first network element, the first information is used to obtain a first certificate, and the first certificate is used to prove an identity of the first network element; the network management network element generates a first signature based on a private key of the network management network element and the first information; and the network management network element sends the first information and the first signature to the first network element.

In the foregoing solution, the network management network element signs the first information to obtain the first signature, and sends the first signature to the first network element, where the first information is used to request the first certificate that can authenticate the identity of the first network element, so that the certificate issuing network element verifies the first signature to determine whether the first network element impersonates or tampers with the first information. In this way, a problem that the first network element can still apply for the first certificate when the first network element impersonates or tampers with the first information can be reduced, improving communication security of the first network element.

In a possible implementation, the network management network element forwards a message for the first network element and the certificate issuing network element. For example, the method further includes: The network management network element receives a first request message from the first network element, where the first information and the first signature include the first information and the first signature, and the first information and the first signature are used to request the first certificate; the network management network element sends the first information and the first signature to the certificate issuing network element; the network management network element receives the first certificate from the certificate issuing network element; and the network management network element sends the first certificate to the first network element.

With reference to the second aspect, in some implementations of the second aspect, the first information includes at least one of the following: a first instance identifier, a first type, a first fully qualified domain name, a first internet protocol address, a first public land mobile network identifier, or a first network slice identifier. The first instance identifier identifies the first network element. The first type indicates a type of the first network element. The first fully qualified domain name or the first internet protocol address indicates an address of the first network element. The public land mobile network identifier indicates a network area in which the first network element is located. The first network slice identifier indicates a network slice on which the first network element is located.

With reference to the second aspect, in some implementations of the second aspect, the method further includes: The network management network element generates second information, where the second information includes at least one of the following: an identifier of the certificate issuing network element or first duration, the identifier of the certificate issuing network element is used to send the first information and the first signature to the certificate issuing network element, and the first duration indicates a validity period of the first certificate; and the network management network element sends the second information to the first network element.

With reference to the second aspect, in some implementations of the second aspect, the second information further includes at least one of the following: a type of the first certificate or first indication information, and the first indication information is used to obtain information used to verify the first signature.

With reference to the second aspect, in some implementations of the second aspect, the method further includes: The network management network element generates the first indication information.

With reference to the second aspect, in some implementations of the second aspect, the method further includes: The network management network element generates the type of the first certificate.

With reference to the second aspect, in some implementations of the second aspect, that the network management network element generates a first signature based on a private key of the network management network element and the first information includes: The network management network element generates the first signature based on the private key of the network management network element, the first information, and the second information.

With reference to the second aspect, in some implementations of the second aspect, the method further includes: The network management network element generates a second signature based on the private key of the network management network element and the second information; and the network management network element sends the second signature to the first network element.

With reference to the second aspect, in some implementations of the second aspect, the method further includes: The network management network element determines the identifier of the certificate issuing network element based on the first type and/or the first public land mobile network identifier.

With reference to the second aspect, in some implementations of the second aspect, the method further includes: The network management network element generates third information, where the third information is used to describe the first network element, the third information is used to obtain a second certificate, and the second certificate is used to prove the identity of the first network element; the network management network element generates a third signature based on the private key of the network management network element and the third information; and the network management network element sends the third information and the third signature to the first network element.

With reference to the second aspect, in some implementations of the second aspect, the third information may be updated first information, or may be an updated parameter in the first information.

According to a third aspect, a secure communication method is provided. The method may be performed by a certificate issuing network element, or may be performed by a component (for example, a chip or a circuit) of a certificate issuing network element. This is not limited in this application. For ease of description, an example in which the method is performed by the certificate issuing network element is used below for description.

The method may include: The certificate issuing network element receives first information and a first signature from a first network element, where the first information is used to request a first certificate, the first information is used to describe the first network element, the first certificate is used to prove an identity of the first network element, and the first signature is used to prove integrity of the first information; the certificate issuing network element verifies the first signature based on a public key of a network management network element and the first information; and when the verification of the first signature succeeds, the certificate issuing network element sends the first certificate to the first network element based on the first information.

In the foregoing solution, when requesting the certificate from the certificate issuing network element, the first network element sends the first signature generated by the network management network element. The certificate issuing network element verifies the first signature to determine whether the first network element impersonates or tampers with the first information. In this way, a problem that the first network element can still apply for the first certificate when the first network element impersonates or tampers with the first information can be reduced, improving communication security of the first network element.

In a first possible implementation, the certificate issuing network element receives the first information and the first signature from the network management network element, and the network management network element is configured to forward the first information and the first signature for the first network element; and the certificate issuing network element sends the first certificate to the network management network element, and the network management network element is configured to forward the first certificate for the certificate issuing network element.

With reference to the third aspect, in some implementations of the third aspect, the method further includes: The certificate authority generates the first certificate based on the first information, where the first certificate includes the first information.

With reference to the third aspect, in some implementations of the third aspect, the method further includes: The certificate issuing network element receives a type of the first certificate from the first network element; and the certificate issuing network element generates the first certificate based on the first information and the type.

With reference to the third aspect, in some implementations of the third aspect, the method further includes: The certificate issuing network element receives first indication information from the first network element, where the first indication information is used to obtain information used to verify the first signature; and the certificate issuing network element determines the public key of the network management network element based on the first indication information.

With reference to the third aspect, in some implementations of the third aspect, the method further includes: The certificate issuing network element receives a public key of the first network element from the first network element; and the certificate issuing network element generates the first certificate based on the first information and the public key of the first network element.

With reference to the third aspect, in some implementations of the third aspect, the first information includes at least one of the following: a first instance identifier, a first type, a first fully qualified domain name, a first internet protocol address, a first public land mobile network identifier, or a first network slice identifier. The first instance identifier identifies the first network element. The first type indicates a type of the first network element. The first fully qualified domain name or the first internet protocol address indicates an address of the first network element. The public land mobile network identifier indicates a network area in which the first network element is located. The first network slice identifier indicates a network slice on which the first network element is located.

With reference to the third aspect, in some implementations of the third aspect, the method further includes: The certificate issuing network element receives second information from the first network element, where the second information includes at least one of the following: an identifier of the certificate issuing network element or first duration, the identifier of the certificate issuing network element is used to send the first information and the first signature to the certificate issuing network element, and the first duration indicates a validity period of the first certificate.

When the second information includes the identifier of the certificate issuing network element, the certificate issuing network element verifies, based on the identifier of the certificate issuing network element, whether the first network element is qualified to apply for the first certificate. When the second information includes the first duration, the certificate issuing network element determines the validity period of the first certificate based on the first duration.

With reference to the third aspect, in some implementations of the third aspect, the second information further includes the type of the first certificate and the first indication information.

With reference to the third aspect, in some implementations of the third aspect, that the certificate issuing network element verifies the first signature based on a public key of the network management network element and the first information includes: The certificate issuing network element verifies the first signature based on the public key of the network management network element, the first information, and the second information.

With reference to the third aspect, in some implementations of the third aspect, the method further includes: The certificate issuing network element receives a second signature from the first network element; and the certificate issuing network element verifies the second signature based on a private key of the network management network element and the second information.

With reference to the third aspect, in some implementations of the third aspect, that the certificate issuing network element sends the first certificate to the first network element based on the first information includes: When the verification of the second signature succeeds, the certificate issuing network element sends the first certificate to the first network element based on the first information and the second information.

With reference to the third aspect, in some implementations of the third aspect, the method further includes: The certificate issuing network element receives third information and a third signature from the first network element, where the third information is used to obtain a second certificate, the third information is used to describe the first network element, and the third certificate is used to prove the identity of the first network element; the certificate issuing network element verifies the third signature based on the public key of the network management network element and the third information; and when the verification succeeds, the certificate issuing network element sends the second certificate to the first network element based on the first information and the third information.

With reference to the third aspect, in some implementations of the third aspect, the method further includes: The certificate authority generates the second certificate based on the first information and the third information.

With reference to the third aspect, in some implementations of the third aspect, the method further includes: The certificate issuing network element receives a cause value from the first network element, where the cause value indicates that the first information is updated.

With reference to the third aspect, in some implementations of the third aspect, the second certificate includes the third information.

With reference to the third aspect, in some implementations of the third aspect, the third information may be updated first information, or may be an updated parameter in the first information.

According to a fourth aspect, a secure communication method is provided. The method may be performed by a first network element, or may be performed by a component (for example, a chip or a circuit) of a first network element. This is not limited in this application. For ease of description, an example in which the method is performed by the first network element is used below for description.

The method may include: The first network element receives an identifier of a certificate issuing network element from a network management network element; the first network element sends first information to the certificate issuing network element based on an identifier of the certificate issuing network element, where the first information is used to obtain a first certificate, the first certificate is used to prove an identity of the first network element, the first information includes a first instance identifier of the first network element, and the first instance identifier identifies the first network element; and the first network element receives the first certificate from the certificate issuing network element.

In the foregoing solution, the first network element obtains the first certificate from the certificate issuing network element based on the identifier of the certificate issuing network element provided by the network management network element. In addition, the first network element sends the identifier to the certificate issuing network element. The certificate issuing network element can compare whether the identifier is consistent with the identifier of the certificate issuing network element to determine whether the first network element impersonates or tampers with the first information. In this way, a problem that the first network element can still apply for the first certificate when the first network element impersonates or tampers with the first information can be reduced, improving communication security of the first network element.

With reference to the fourth aspect, in some implementations of the fourth aspect, the first information includes the first instance identifier of the first network element.

With reference to the fourth aspect, in some implementations of the fourth aspect, the first information further includes at least one of the following information: a first type, a first fully qualified domain name, a first internet protocol address, a first public land mobile network identifier, or a first network slice identifier. The first type indicates a type of the first network element. The first fully qualified domain name or the first internet protocol address indicates an address of the first network element. The public land mobile network identifier indicates a network area in which the first network element is located. The first network slice identifier indicates a network slice on which the first network element is located.

With reference to the fourth aspect, in some implementations of the fourth aspect, the first information further includes first duration, and the first duration is used to determine a validity period of the first certificate.

With reference to the fourth aspect, in some implementations of the fourth aspect, the first information further includes a type of the first certificate.

With reference to the fourth aspect, in some implementations of the fourth aspect, the method further includes: The first network element receives third information from the network management network element, where the third information includes information used to profile the first network element; and the first network element determines the first information based on the third information.

With reference to the fourth aspect, in some implementations of the fourth aspect, the third information further includes at least one of the following information: the identifier of the certificate issuing network element or the first duration, and the first duration is used to determine the validity period of the first certificate.

With reference to the fourth aspect, in some implementations of the fourth aspect, the method further includes: The first network element receives the identifier of the certificate issuing network element from the network management network element, or the first network element receives, from the network management network element, indication information indicating that the identifier of the certificate issuing network element remains unchanged; and the first network element sends fourth information to the certificate issuing network element, where the fourth information is used to obtain a second certificate, the second certificate is used to prove the identity of the first network element, the fourth information includes a second instance identifier of the first network element, and the second instance identifier identifies the first network element.

In a possible implementation, the fourth information includes indication information, and the indication information indicates that the first information is updated.

With reference to the fourth aspect, in some implementations of the fourth aspect, the second request message further includes a cause value, and the cause value indicates that the fourth information is updated first information.

With reference to the fourth aspect, in some implementations of the fourth aspect, the fourth information further includes at least one of the following information: a second type, a second fully qualified domain name, a second internet protocol address, a second public land mobile network identifier, or a second network slice identifier. The second type indicates a type of the first network element. The second fully qualified domain name or the second internet protocol address indicates an address of the first network element. The public land mobile network identifier indicates a network area in which the first network element is located. The second network slice identifier indicates a network slice on which the first network element is located.

With reference to the fourth aspect, in some implementations of the fourth aspect, the first information further includes second duration, and the second duration is used to determine a validity period of the second certificate.

With reference to the fourth aspect, in some implementations of the fourth aspect, the method further includes: The first network element receives sixth information from the network management network element, where the sixth information includes information used to profile the first network element; and the first network element determines the fourth information based on the sixth information.

With reference to the fourth aspect, in some implementations of the fourth aspect, the sixth information includes at least one of the following: a second type of the first network element, a second fully qualified domain name of the first network element, or a second public land mobile network identifier, and the second public land mobile network identifier is used to determine a network area in which the first network element is located.

With reference to the fourth aspect, in some implementations of the fourth aspect, the sixth information further includes at least one of the following information: the identifier of the certificate issuing network element or the second duration. The second duration is used to determine the validity period of the second certificate. The second certificate is used to prove the identity of the first network element. The certificate issuing network element is configured to issue the second certificate.

With reference to the fourth aspect, in some implementations of the fourth aspect, the fourth information further includes a type of the second certificate.

According to a fifth aspect, a secure communication method is provided. The method may be performed by a network management network element, or may be performed by a component (for example, a chip or a circuit) of a network management network element. This is not limited in this application. For ease of description, an example in which the method is performed by the network management network element is used below for description.

The method may include: The network management network element receives first information from a certificate issuing network element, where the first information is used to obtain a verification result of the first information, the first information includes a first instance identifier of a first network element, and the first instance identifier identifies the first network element; and the network management network element sends second information to the certificate issuing network element based on the first information, where the second information indicates the verification result.

In the foregoing solution, the certificate issuing network element sends the first information to the network management network element. The network management network element verifies the first information, and feeds back the verification result to the certificate issuing network element. By verifying the first information by the network management network element, a problem that the first network element can still apply for a first certificate when the first network element impersonates or tampers with the first information can be reduced, improving communication security of the first network element.

In a possible implementation, the network management network element forwards a message for the first network element and the certificate issuing network element. For example, the method further includes: The network management network element receives the first information from the first network element, where the first request message is used to obtain the first certificate; the network management network element sends the first information to the certificate issuing network element; the network management network element receives the first certificate from the certificate issuing network element; and the network management network element sends the first certificate to the first network element.

With reference to the fifth aspect, in some implementations of the fifth aspect, the first information further includes at least one of the following information: a first type, a first fully qualified domain name, a first internet protocol address, a first public land mobile network identifier, or a first network slice identifier. The first type indicates a type of the first network element. The first fully qualified domain name or the first internet protocol address indicates an address of the first network element. The public land mobile network identifier indicates a network area in which the first network element is located. The first network slice identifier indicates a network slice on which the first network element is located.

With reference to the fifth aspect, in some implementations of the fifth aspect, that the network management network element sends second information to the certificate issuing network element based on the first information includes: The network management network element verifies the first information to obtain the verification result; and the network management network element sends the second information to the certificate issuing network element based on the verification result.

In a possible implementation, when the verification of the first information fails, the second information may indicate that the verification of the first information fails. Alternatively, more specifically, the second information may indicate that the verification of the first information fails or the first information does not exist. When the network management network element determines that some content in the first information is tampered with, the second information may indicate that the verification of the first information fails. When the network management network element determines that a network element profiled by the first information does not exist, the second information may indicate that the first information does not exist.

With reference to the fifth aspect, in some implementations of the fifth aspect, the first information further includes a type of the first certificate.

With reference to the fifth aspect, in some implementations of the fifth aspect, the method further includes: The network management network element generates the type of the first certificate.

With reference to the fifth aspect, in some implementations of the fifth aspect, when the verification result is that the verification succeeds, the second information includes at least one of the following information: the first instance identifier of the first network element, the first type of the first network element, the first fully qualified domain name of the first network element, or the first public land mobile network identifier.

With reference to the fifth aspect, in some implementations of the fifth aspect, that the network management network element sends second information to the certificate issuing network element based on the first information includes: The network management network element determines the second information based on the first information; and the network management network element sends the second information to the certificate issuing network element.

With reference to the fifth aspect, in some implementations of the fifth aspect, the method further includes: The network management network element sends third information to the first network element, where the third information includes the first information and the second information.

With reference to the fifth aspect, in some implementations of the fifth aspect, the method further includes: The network management network element determines an identifier of the certificate issuing network element based on the first type and/or the first public land mobile network identifier.

With reference to the fifth aspect, in some implementations of the fifth aspect, the method further includes: The network management network element receives fourth information from the certificate issuing network element, where the fourth information is used to obtain a verification result of the fourth information, and the fourth information includes information used to profile the first network element; and the network management network element sends fifth information to the certificate issuing network element based on the first information and the fourth information, where the fifth information indicates the verification result.

With reference to the fifth aspect, in some implementations of the fifth aspect, that the fourth information is used to obtain a verification result of the fourth information includes: The first information and the fourth information are used to obtain the verification result of the first information and the verification result of the fourth information.

In a possible implementation, the fourth information includes indication information, and the indication information indicates that the first information is updated.

With reference to the fifth aspect, in some implementations of the fifth aspect, a second request message further includes a cause value, and the cause value indicates that the fourth information is updated first information.

With reference to the fifth aspect, in some implementations of the fifth aspect, the fourth information further includes at least one of the following information: a second instance identifier, a second type, a second fully qualified domain name, a second internet protocol address, a second public land mobile network identifier, or a second network slice identifier. The second instance identifier identifies the first network element. The second type indicates the type of the first network element. The second fully qualified domain name or the second internet protocol address indicates an address of the first network element. The public land mobile network identifier indicates a network area in which the first network element is located. The second network slice identifier indicates a network slice on which the first network element is located.

With reference to the fifth aspect, in some implementations of the fifth aspect, that the network management network element sends fifth information to the certificate issuing network element based on the fourth information includes: The network management network element verifies the fourth information to obtain the verification result; and the network management network element sends the fifth information to the certificate issuing network element based on the verification result.

With reference to the fifth aspect, in some implementations of the fifth aspect, that the network management network element verifies the fourth information includes: The network management network element verifies the first information and the fourth information.

In a possible implementation, when the verification of the fourth information fails, the fifth information may indicate that the verification of the fourth information fails. Alternatively, more specifically, the fifth information may indicate that the verification of the fourth information fails or the fourth information does not exist. When the network management network element determines that some content in the fourth information is tampered with, the fifth information may indicate that the verification of the fourth information fails. When the network management network element determines that a network element profiled by the fourth information does not exist, the fifth information may indicate that the fourth information does not exist.

With reference to the fifth aspect, in some implementations of the fifth aspect, when the verification result is that the verification succeeds, the fifth information includes at least one of the following information: the second instance identifier of the first network element, the second type of the first network element, the second fully qualified domain name of the first network element, or the second public land mobile network identifier.

With reference to the fifth aspect, in some implementations of the fifth aspect, the fourth information further includes a type of the second certificate.

With reference to the fifth aspect, in some implementations of the fifth aspect, the method further includes: The network management network element generates the type of the second certificate.

With reference to the fifth aspect, in some implementations of the fifth aspect, that the network management network element sends fifth information to the certificate issuing network element based on the fourth information includes: The network management network element determines the fifth information based on the fourth information, where the fourth information and the fifth information both include information used to profile the first network element; and the network management network element sends the fifth information to the certificate issuing network element.

With reference to the fifth aspect, in some implementations of the fifth aspect, the method further includes: The network management network element sends sixth information to the first network element, where the sixth information includes the fourth information and the fifth information.

With reference to the fifth aspect, in some implementations of the fifth aspect, the method further includes: The network management network element determines the identifier of the certificate issuing network element based on the second type and the second public land mobile network identifier.

According to a sixth aspect, a secure communication method is provided. The method may be performed by a certificate issuing network element, or may be performed by a component (for example, a chip or a circuit) of a certificate issuing network element. This is not limited in this application. For ease of description, an example in which the method is performed by the certificate issuing network element is used below for description.

The method may include: The certificate issuing network element receives first information from a first network element, where the first information is used to obtain a first certificate, the first certificate is used to prove an identity of the first network element, the first information includes a first instance identifier of the first network element, and the first instance identifier identifies the first network element; the certificate issuing network element sends the first information to a network management network element, where the first information is used to obtain a verification result of the first information; the certificate issuing network element receives second information from the network management network element, where the second information indicates the verification result; and when the verification succeeds, the certificate issuing network element sends the first certificate to the first network element based on the first information and the second information.

In the foregoing solution, the first network element sends the first information to the certificate issuing network element, where the first information is used to obtain the first certificate. The certificate issuing network element sends the first information to the network management network element. After verification performed by the network management network element on the first information succeeds, the certificate issuing network element issues the first certificate to the first network element. By verifying the first information by the network management network element, a problem that the first network element can still apply for a first certificate when the first network element impersonates or tampers with the first information can be reduced, improving communication security of the first network element.

With reference to the sixth aspect, in some implementations of the sixth aspect, the first information further includes at least one of the following information: a first type, a first fully qualified domain name, a first internet protocol address, a first public land mobile network identifier, or a first network slice identifier. The first type indicates a type of the first network element. The first fully qualified domain name or the first internet protocol address indicates an address of the first network element. The public land mobile network identifier indicates a network area in which the first network element is located. The first network slice identifier indicates a network slice on which the first network element is located.

With reference to the sixth aspect, in some implementations of the sixth aspect, when the verification result is that the verification succeeds, the second information includes at least one of the following information: the first instance identifier of the first network element, the first type of the first network element, the first fully qualified domain name of the first network element, or the first public land mobile network identifier.

With reference to the sixth aspect, in some implementations of the sixth aspect, the first information further includes at least one of the following information: an identifier of the certificate issuing network element or first duration, and the first duration is used to determine a validity period of the first certificate.

With reference to the sixth aspect, in some implementations of the sixth aspect, the first information further includes a type of the first certificate.

With reference to the sixth aspect, in some implementations of the sixth aspect, when the first information includes the identifier of the certificate issuing network element, that the certificate issuing network element sends the first certificate to the first network element based on the first information and the second information includes: The certificate issuing network element verifies, based on the first information, whether the first network element is qualified to apply for the first certificate; and when the first network element is qualified to apply for the first certificate, the certificate issuing network element sends the first certificate to the first network element based on the first information and the second information.

With reference to the sixth aspect, in some implementations of the sixth aspect, that the certificate issuing network element sends the first certificate to the first network element based on the first information and the second information includes: The certificate issuing network element generates the first certificate based on the first information and the second information, and the certificate issuing network element sends the first certificate to the first network element.

With reference to the sixth aspect, in some implementations of the sixth aspect, the certificate issuing network element receives fourth information from the first network element, where the fourth information is used to obtain a second certificate, the second certificate is used to prove the identity of the first network element, the fourth information includes a second instance identifier of the first network element, and the second instance identifier identifies the first network element; the certificate issuing network element sends the fourth information to the network management network element, where the fourth information is used to obtain a verification result of the fourth information; the certificate issuing network element receives fifth information from the network management network element, where the fifth information indicates the verification result; and when the verification succeeds, the certificate issuing network element sends the second certificate to the first network element based on the fourth information and the fifth information.

With reference to the sixth aspect, in some implementations of the sixth aspect, that the fourth information is used to obtain a second certificate includes: The fourth information and the first information are used to obtain the second certificate. That the certificate issuing network element sends the fourth information to the network management network element includes: The certificate issuing network element sends the first information and the fourth information to the network management network element, where the first information and the fourth information are used to obtain the verification result of the first information and the verification result of the fourth information. That the certificate issuing network element sends the second certificate to the first network element based on the fourth information and the fifth information includes: The certificate issuing network element sends the second certificate to the first network element based on the first information, the fourth information, and the fifth information.

With reference to the sixth aspect, in some implementations of the sixth aspect, the fourth information includes indication information, and the indication information indicates that the first information is updated.

With reference to the sixth aspect, in some implementations of the sixth aspect, a fourth request message includes a cause value, and the cause value indicates that the first information is updated.

With reference to the sixth aspect, in some implementations of the sixth aspect, the fourth information further includes at least one of the following information: a second type, a second fully qualified domain name, a second internet protocol address, a second public land mobile network identifier, or a second network slice identifier. The second type indicates a type of the first network element. The second fully qualified domain name or the second internet protocol address indicates an address of the first network element. The public land mobile network identifier indicates a network area in which the first network element is located. The second network slice identifier indicates a network slice on which the first network element is located.

With reference to the sixth aspect, in some implementations of the sixth aspect, when the verification result is that the verification succeeds, the fifth information includes at least one of the following information: a second instance identifier of the first network element, a second type of the first network element, a second fully qualified domain name of the first network element, or a second public land mobile network identifier.

With reference to the sixth aspect, in some implementations of the sixth aspect, the fourth information further includes at least one of the following information: an identifier of the certificate issuing network element or second duration, and the second duration is used to determine a validity period of the second certificate.

With reference to the sixth aspect, in some implementations of the sixth aspect, the fourth information further includes a type of the second certificate.

With reference to the sixth aspect, in some implementations of the sixth aspect, when the fourth information includes the identifier of the certificate issuing network element, that the certificate issuing network element sends the second certificate to the first network element based on the fourth information and the fifth information includes: The certificate issuing network element verifies, based on the fourth information, whether the first network element is qualified to apply for the second certificate; and when the first network element is qualified to apply for the second certificate, the certificate issuing network element sends the second certificate to the first network element based on the fourth information and the fifth information.

With reference to the sixth aspect, in some implementations of the sixth aspect, that the certificate issuing network element sends the second certificate to the first network element based on the fourth information and the fifth information includes: The certificate issuing network element generates the second certificate based on the fourth information and the fifth information, and the certificate issuing network element sends the second certificate to the first network element.

According to a seventh aspect, a secure communication method is provided. The method may be performed by a network management network element, or may be performed by a component (for example, a chip or a circuit) of a network management network element. This is not limited in this application. For ease of description, an example in which the method is performed by the network management network element is used below for description.

The method may include: The network management network element sends a first request message to a certificate issuing network element, where the first request message includes first information, the first information is used to obtain a first certificate for a first network element, the first information includes information used to profile the first network element, and the first certificate is used to prove an identity of the first network element; the network management network element receives the first certificate from the certificate issuing network element; and the network management network element sends the first certificate to the first network element.

In the foregoing solution, the network management network element applies to the certificate issuing network element for a certificate for the first network element, so that the first network element can be prevented from impersonating or tampering with information used to generate the certificate, improving communication security.

With reference to the seventh aspect, in some implementations of the seventh aspect, the method further includes: The network management network element sends a first signature to the certificate issuing authority, where the first signature is generated based on a private key of the network management network element and the first information.

With reference to the seventh aspect, in some implementations of the seventh aspect, the first certificate includes the information used to profile the first network element.

With reference to the seventh aspect, in some implementations of the seventh aspect, the method further includes: The network management network element sends first indication information to the certificate issuing network element, where the first indication information is used to obtain information used to verify the first signature.

With reference to the seventh aspect, in some implementations of the seventh aspect, the method further includes: The network management network element sends a type of the first certificate to the certificate issuing network element.

With reference to the seventh aspect, in some implementations of the seventh aspect, the method further includes: The network management network element sends a public key of the first network element to the certificate issuing network element.

With reference to the seventh aspect, in some implementations of the seventh aspect, the information that is in the first information and that is used to profile the first network element includes at least one of the following: a first instance identifier, a first type, a first fully qualified domain name, a first internet protocol address, a first public land mobile network identifier, or a first network slice identifier. The first instance identifier identifies the first network element. The first type indicates a type of the first network element. The first fully qualified domain name or the first internet protocol address indicates an address of the first network element. The public land mobile network identifier indicates a network area in which the first network element is located. The first network slice identifier indicates a network slice on which the first network element is located.

With reference to the seventh aspect, in some implementations of the seventh aspect, the method further includes: The network management network element determines the certificate issuing network element based on the first type and/or the first public land mobile network identifier of the first network element.

With reference to the seventh aspect, in some implementations of the seventh aspect, the first information further includes a first public key of the first network element, and the method further includes: The network management network element sends a first private key of the first network element to the first network element, where the first private key and the first public key are generated by the network management network element.

With reference to the seventh aspect, in some implementations of the seventh aspect, the method further includes: The network management network element receives the first public key of the first network element from the first network element, where the first request message includes the first public key.

With reference to the seventh aspect, in some implementations of the seventh aspect, the first information further includes first duration, and the first duration is used to determine a validity period of the first certificate.

With reference to the seventh aspect, in some implementations of the seventh aspect, the method further includes: The network management network element sends second information to the certificate issuing network element, where the second information is used to obtain a second certificate for the first network element, the second certificate is used to prove the identity of the first network element, the second information includes the information used to profile the first network element, and the second information includes the information used to profile the first network element; the network management network element receives the second certificate from the certificate issuing network element; and the network management network element sends the second certificate to the first network element.

With reference to the seventh aspect, in some implementations of the seventh aspect, that the network management network element sends second information to the certificate issuing network element includes: The network management network element sends the first information and the second information to the certificate issuing network element, where the second information and the first information are used to obtain the second certificate for the first network element.

With reference to the seventh aspect, in some implementations of the seventh aspect, the method further includes: The network management network element sends a cause value to the certificate issuing network element, where the cause value indicates that the first information is updated.

With reference to the seventh aspect, in some implementations of the seventh aspect, the second information includes indication information, and the indication information indicates that the first information is updated.

With reference to the seventh aspect, in some implementations of the seventh aspect, the second certificate includes the second information.

With reference to the seventh aspect, in some implementations of the seventh aspect, the method further includes: The network management network element sends a type of the second certificate to the certificate issuing network element.

With reference to the seventh aspect, in some implementations of the seventh aspect, the information that is in the second information and that is used to profile the first network element includes at least one of the following: a second instance identifier, a second type, a second fully qualified domain name, a second internet protocol address, a second public land mobile network identifier, or a second network slice identifier. The second instance identifier identifies the first network element. The second type indicates a type of the first network element. The second fully qualified domain name or the second internet protocol address indicates an address of the first network element. The second public land mobile network identifier indicates a network area in which the first network element is located. The second network slice identifier indicates a network slice on which the first network element is located.

With reference to the seventh aspect, in some implementations of the seventh aspect, the method further includes: The certificate issuing authority receives a second signature from the network management network element, where the second signature is generated based on the private key of the network management network element and the second information.

With reference to the seventh aspect, in some implementations of the seventh aspect, the method further includes: The network management network element sends second indication information to the certificate issuing network element, where the second indication information is used to obtain information used to verify the second signature.

With reference to the seventh aspect, in some implementations of the seventh aspect, the second information further includes a second public key of the first network element, and the method further includes: The network management network element sends a second private key of the first network element to the first network element, where the second private key and the second public key are generated by the network management network element.

With reference to the seventh aspect, in some implementations of the seventh aspect, the method further includes: The network management network element receives the second public key of the first network element from the first network element, where a second request message includes the second public key.

With reference to the seventh aspect, in some implementations of the seventh aspect, the second information further includes an identifier of the certificate issuing network element, or the second information further includes indication information indicating that an identifier of the certificate issuing network element remains unchanged.

With reference to the seventh aspect, in some implementations of the seventh aspect, the second information further includes second duration, and the second duration is used to determine a validity period of the second certificate.

According to an eighth aspect, a secure communication method is provided. The method may be performed by a first network element, or may be performed by a component (for example, a chip or a circuit) of a first network element. This is not limited in this application. For ease of description, an example in which the method is performed by the first network element is used below for description.

The method may include: The first network element receives a first certificate and first information from a network management network element, where the first certificate is used to prove an identity of the first network element, and the first information includes information used to profile the first network element.

With reference to the eighth aspect, in some implementations of the eighth aspect, the method further includes: The first network element receives a first private key of the first network element from the network management network element, where the first private key is generated by the network management network element.

With reference to the eighth aspect, in some implementations of the eighth aspect, the method further includes: The first network element generates a first public key and a first private key, and the first network element sends the first public key to the network management network element.

With reference to the eighth aspect, in some implementations of the eighth aspect, the first information includes at least one of the following: a type of the first network element or a first public land mobile network identifier, and the first public land mobile network identifier indicates a network area in which the first network element is located.

With reference to the eighth aspect, in some implementations of the eighth aspect, the information that is in the first information and that is used to profile the first network element includes at least one of the following: a first instance identifier, a first type, a first fully qualified domain name, a first internet protocol address, a first public land mobile network identifier, or a first network slice identifier. The first instance identifier identifies the first network element. The first type indicates a type of the first network element. The first fully qualified domain name or the first internet protocol address indicates an address of the first network element. The public land mobile network identifier indicates a network area in which the first network element is located. The first network slice identifier indicates a network slice on which the first network element is located.

With reference to the eighth aspect, in some implementations of the eighth aspect, the method further includes: The first network element receives a second private key of the first network element, a second certificate, and second information from the network management network element, where the second private key of the first network element is generated by the network management network element, the second certificate is used to prove the identity of the first network element, and the second information includes information used to profile the first network element.

With reference to the eighth aspect, in some implementations of the eighth aspect, the second information includes indication information, and the indication information indicates that the first information is updated.

With reference to the eighth aspect, in some implementations of the eighth aspect, the information that is in the second information and that is used to profile the first network element includes at least one of the following: a second instance identifier, a second type, a second fully qualified domain name, a second internet protocol address, a second public land mobile network identifier, or a second network slice identifier. The second instance identifier identifies the first network element. The second type indicates a type of the first network element. The second fully qualified domain name or the second internet protocol address indicates an address of the first network element. The public land mobile network identifier indicates a network area in which the first network element is located. The second network slice identifier indicates a network slice on which the first network element is located.

With reference to the eighth aspect, in some implementations of the eighth aspect, the method further includes: The first network element receives a second private key of the first network element from the network management network element, where the second private key is generated by the network management network element.

With reference to the eighth aspect, in some implementations of the eighth aspect, the method further includes: The first network element generates a second public key and a second private key, and the first network element sends the second public key to the network management network element.

According to a ninth aspect, a secure communication method is provided. The method may be performed by a certificate issuing network element, or may be performed by a component (for example, a chip or a circuit) of a certificate issuing network element. This is not limited in this application. For ease of description, an example in which the method is performed by the certificate issuing network element is used below for description.

The method may include: The certificate issuing network element receives first information from a network management network element, where the first information is used to obtain a first certificate, the first information includes information used to profile a first network element, and the first certificate is used to prove an identity of the first network element; and the certificate issuing network element sends the first certificate to the network management network element based on the first information.

With reference to the ninth aspect, in some implementations of the ninth aspect, the method further includes: The certificate issuing network element receives a first signature from the network management network element; and the certificate issuing network element verifies the first signature based on a public key of the network management network element and the first information. That the certificate issuing network element sends the first certificate to the network management network element based on the first information includes: When the verification succeeds, the certificate issuing network element sends the first certificate to the network management network element based on the first information.

In the foregoing solution, when requesting the certificate from the certificate issuing network element, the first network element sends the first signature generated by the network management network element. The certificate issuing network element verifies the first signature to determine whether the first network element impersonates or tampers with the first information. In this way, a problem that the first network element can still apply for the first certificate when the first network element impersonates or tampers with the first information can be reduced, improving communication security of the first network element.

With reference to the ninth aspect, in some implementations of the ninth aspect, the method further includes: The certificate issuing network element generates the first certificate based on the first information, where the first certificate includes the information used to profile the first network element.

With reference to the ninth aspect, in some implementations of the ninth aspect, the method further includes: The certificate issuing network element receives first indication information from the network management network element, where the first indication information is used to obtain information used to verify the first signature.

With reference to the ninth aspect, in some implementations of the ninth aspect, the method further includes: The certificate issuing network element receives a type of the first certificate from the network management network element.

With reference to the ninth aspect, in some implementations of the ninth aspect, the method further includes: The certificate issuing network element receives a public key of the first network element from the network management network element.

With reference to the ninth aspect, in some implementations of the ninth aspect, the first information further includes at least one of the following: a first instance identifier, a first type, a first fully qualified domain name, a first internet protocol address, a first public land mobile network identifier, or a first network slice identifier. The first instance identifier identifies the first network element. The first type indicates a type of the first network element. The first fully qualified domain name or the first internet protocol address indicates an address of the first network element. The public land mobile network identifier indicates a network area in which the first network element is located. The first network slice identifier indicates a network slice on which the first network element is located.

With reference to the ninth aspect, in some implementations of the ninth aspect, the method further includes: The certificate issuing network element verifies, based on an identifier that is of the certificate issuing network element and that is included in the first information and/or an identifier that is of the certificate issuing network element and that is included in the first signature, whether the first network element is qualified to apply for the first certificate.

With reference to the ninth aspect, in some implementations of the ninth aspect, the first information further includes first duration, and the method further includes: The certificate issuing network element determines a validity period of the first certificate based on the first duration.

With reference to the ninth aspect, in some implementations of the ninth aspect, the method further includes: The certificate issuing network element receives second information from the network management network element, where the second information is used to obtain a second certificate, the second information includes the information used to profile the first network element, and the second certificate is used to prove the identity of the first network element; and the certificate issuing network element sends the second certificate to the network management network element based on the second information.

With reference to the ninth aspect, in some implementations of the ninth aspect, that the certificate issuing network element receives second information from the network management network element includes: The certificate issuing network element receives the first information and the second information from the network management network element, where the first information and the second information are used to obtain the second certificate. That the certificate issuing network element sends the second certificate to the network management network element based on the second information includes: The certificate issuing network element sends the second certificate to the network management network element based on the first information and the second information.

With reference to the ninth aspect, in some implementations of the ninth aspect, the method further includes: The certificate issuing network element receives a second signature from the network management network element; and the certificate issuing network element verifies the second signature based on a public key of the network management network element and the second information. That the certificate issuing network element sends the second certificate to the network management network element based on the second information includes: When the verification succeeds, the certificate issuing network element sends the second certificate to the network management network element based on the second information.

With reference to the ninth aspect, in some implementations of the ninth aspect, that the certificate issuing network element verifies the second signature based on a public key of the network management network element and the second information includes: The certificate issuing network element verifies the second signature based on the public key of the network management network element, the first information, and the second information. That the certificate issuing network element sends the second certificate to the network management network element based on the second information includes: The certificate issuing network element sends the second certificate to the network management network element based on the first information and the second information.

With reference to the ninth aspect, in some implementations of the ninth aspect, the method further includes: The certificate issuing network element generates the second certificate based on the second information, where the second certificate includes the information used to profile the first network element.

With reference to the ninth aspect, in some implementations of the ninth aspect, the method further includes: The certificate issuing network element receives second indication information from the network management network element, where the second indication information is used to obtain information used to verify the second signature.

With reference to the ninth aspect, in some implementations of the ninth aspect, the method further includes: The certificate issuing network element receives a type of the second certificate from the network management network element.

With reference to the ninth aspect, in some implementations of the ninth aspect, the method further includes: The certificate issuing network element receives a public key of the second network element from the network management network element.

With reference to the ninth aspect, in some implementations of the ninth aspect, the second information includes indication information, and the indication information indicates that the first information is updated.

With reference to the ninth aspect, in some implementations of the ninth aspect, a certificate update request message includes a cause value, and the cause value indicates that the second information is updated first information.

With reference to the ninth aspect, in some implementations of the ninth aspect, the method further includes: The certificate issuing network element verifies, based on an identifier that is of the certificate issuing network element and that is included in the second information and/or an identifier that is of the certificate issuing network element and that is included in the second signature, whether the first network element is qualified to apply for the second certificate.

With reference to the ninth aspect, in some implementations of the ninth aspect, the second information further includes second duration, and the method further includes: The certificate issuing network element determines a validity period of the second certificate based on the second duration.

With reference to the ninth aspect, in some implementations of the ninth aspect, the second certificate is an updated first certificate.

With reference to the ninth aspect, in some implementations of the ninth aspect, the second information further includes at least one of the following: a second instance identifier of the first network element, a second type of the first network element, a second fully qualified domain name of the first network element, or a second public land mobile network identifier.

According to a tenth aspect, a secure communication apparatus is provided. The apparatus is configured to perform the method according to any one of the first aspect or the possible implementations of the first aspect. Specifically, the apparatus may include a unit and/or a module configured to perform the method according to any one of the first aspect or the possible implementations of the first aspect, for example, a processing unit and/or a communication unit.

In an implementation, the apparatus is a communication device (for example, a network management network element, a first network element, or a certificate issuing network element). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a network management network element, a first network element, or a certificate issuing network element). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eleventh aspect, a secure communication apparatus is provided. The apparatus includes at least one processor, configured to execute a computer program or instructions stored in a memory to perform the method according to any one of the possible implementations of the first aspect to the ninth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a network management network element, a first network element, or a certificate issuing network element).

In another implementation, the apparatus is a chip, a chip system, or a circuit used in a communication device (for example, a network management network element, a first network element, or a certificate issuing network element).

According to a twelfth aspect, this application provides a processor, configured to perform the methods provided in the first aspect to the ninth aspect.

Operations such as sending and obtaining/receiving that are related to the processor may be understood as operations such as outputting and receiving or inputting of the processor, or may be understood as sending and receiving operations performed by a radio frequency circuit and an antenna, unless otherwise specified, or provided that the operations do not contradict actual functions or internal logic of the operations in related descriptions. This is not limited in this application.

According to a thirteenth aspect, a computer-readable storage medium is provided. The computer-readable storage medium stores program code to be executed by a device, and the program code is used to perform the method according to any one of the possible implementations of the first aspect to the ninth aspect.

According to a fourteenth aspect, a computer program product including instructions is provided. When the computer program product runs on a computer, the computer is enabled to perform the method according to any one of the possible implementations of the first aspect to the ninth aspect.

According to a fifteenth aspect, a communication system is provided, including the foregoing first network element and network management network element.

In an implementation, the communication system further includes the foregoing certificate issuing network element.

### BRIEF DESCRIPTION OF DRAWINGS

FIG. 1 shows a 5G system architecture;
FIG. 2 shows an example of a tree structure of a PKI system hierarchy;
FIG. 3 is a diagram of a secure communication method 100 according to this application;
FIG. 4 is a diagram of a secure communication method 110 according to this application;
FIG. 5 is a diagram of a secure communication method 120 according to this application;
FIG. 6 is a diagram of a secure communication method 200 according to this application;
FIG. 7 is a diagram of a secure communication method 300 according to this application;
FIG. 8 is a diagram of a secure communication method 400 according to this application;
FIG. 9 is a diagram of a secure communication apparatus 1000 according to an embodiment of this application;
FIG. 10 is a diagram of another secure communication apparatus 1100 according to an embodiment of this application; and
FIG. 11 is a diagram of a chip system 1200 according to an embodiment of this application.

### DESCRIPTION OF EMBODIMENTS

The following describes technical solutions in this application with reference to the accompanying drawings.

The technical solutions provided in this application may be applied to various communication systems, for example, a 5^{th} generation (5^{th} generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6^{th} generation (6^{th} generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

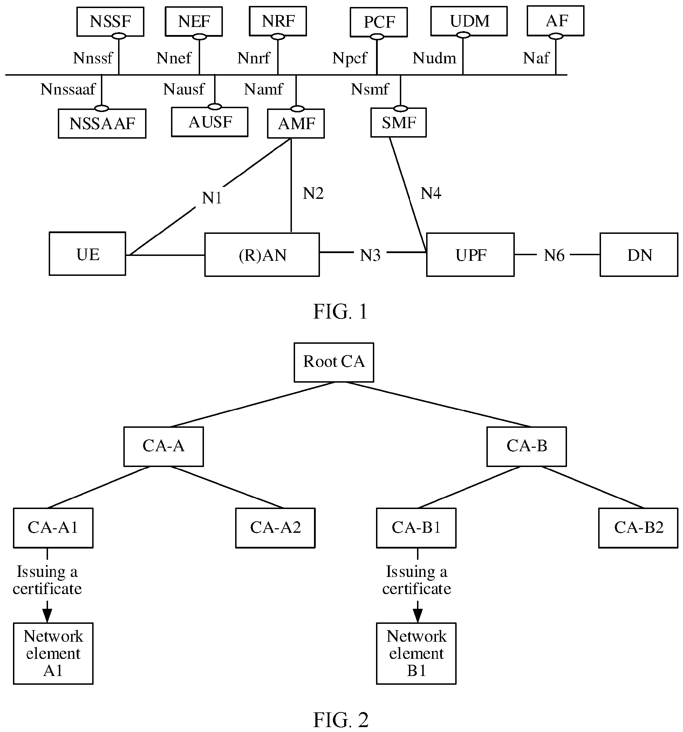

FIG. 1 shows a 5G system architecture. As shown in FIG. 1, the 5G system architecture is divided into two parts: an access network and a core network. The access network is configured to implement a function related to radio access. The core network mainly includes the following key logical network elements: a radio access network (radio access network, RAN), an access and mobility management network element (access and mobility management function, AMF), a session management network element (session management function, SMF), a user plane network element (user plane function, UPF), a policy control network element (policy control function), a unified data management network element (unified data management, UDM), and a network slice authentication and authorization network element (the network slice specific authentication and authorization function, NSSAAF).

A terminal (user equipment, UE) is a network terminal device, such as a mobile phone or an internet of things terminal device.

The RAN provides a wireless access device for a terminal device, including but not limited to an evolved NodeB (evolved NodeB, eNodeB), a Wi-Fi access point, a worldwide interoperability for microwave access base station, or the like.

The AMF is mainly responsible for mobility management in a mobile network, such as user location update, user network registration, and user handover.

The SMF is mainly responsible for session management in the mobile network, such as session establishment, modification, and release. Specific functions may be, for example, allocating an internet protocol (internet protocol, IP) address to a user and selecting a UPF providing a packet forwarding function.

The PCF is responsible for providing policies, such as a quality of service policy and a slice selection policy, for the AMF and the SMF.

The UDM is configured to store user data, such as subscription information and authentication/authorization information.

The NSSAAF is mainly responsible for authentication and authorization of a network slice, and may interact with an authentication, authorization, and accounting server (authentication, authorization, and accounting Server, AAA-S) by using an authentication, authorization, and accounting proxy (authentication, authorization, and accounting proxy, AAA-P).

An application function (application function, AF) is responsible for providing a service for a 3GPP network, for example, affecting service routing and interacting with the PCF for policy control.

The UPF is mainly responsible for processing a user packet, such as forwarding and charging.

A DN is an operator network that provides a data transmission service for a user, for example, an internet protocol multimedia service (internet protocol Multi-media Service, IMS) or an internet (Internet).

The UE accesses a data network (data network, DN) by establishing a protocol data unit (protocol data unit, PDU) session between the UE and the RAN, the UPF, and the DN.

To better understand embodiments of this application, the following describes some technical terms in this application.

### 1. Asymmetric encryption algorithm, digital signature, and signature verification

When the asymmetric encryption algorithm is used, both a public key and a private key are required. The public key corresponds to the private key. If the public key is used for data encryption, decryption can be performed only by using the corresponding private key. If the private key is used for data encryption, decryption can be performed only by using the corresponding public key. A basic process of encrypting transmitted information by using the asymmetric encryption algorithm is: Party A first generates a pair of keys and uses one of the keys as the public key. Party B obtaining the public key uses the key to encrypt to-be-encrypted information and sends the encrypted information to Party A. Party A uses the other corresponding private key to decrypt the encrypted information. In this way, confidential data is transmitted. Another encryption process of the asymmetric encryption algorithm is: Party A uses its own private key to encrypt information and then sends the encrypted information to Party B. Party B uses a public key provided by Party A to decrypt the encrypted information. If the decryption succeeds, it can be confirmed that the information is sent by Party A instead of another party. This is a common digital signature technology.

A digital signature is application of an asymmetric cryptography (asymmetric cryptography) technology. Asymmetric cryptography is a type of cryptographic algorithm. In such a cryptographic method, a pair of keys is required, where one is a private key (usually referred to as a private key), and the other is a public key (usually referred to as a public key). The two keys are mathematically related. Usually, one is used as an encryption key, and the other is used as a decryption key. Information encrypted by using the encryption key can be decrypted only by using the decryption key corresponding to the encryption key. Therefore, an owner of the private key can encrypt the information by using the private key to ensure integrity and accuracy of the information. The information encrypted by using the private key is referred to as a digital signature, which is referred to as a signature for short.

The digital signature has the following several features:
(1) Anti-counterfeiting (anti-forgery): The private key is known only by a signer. Therefore, others cannot construct a correct key.
(2) Implementability of identity authentication: As described above, the digital signature cannot be forged by others. Therefore, a receiver can authenticate an identity claimed by a sender.
(3) Anti-tampering (anti-damage of information integrity): For the digital signature, the signature and an original file form mixed and integrated data and cannot be tampered with, ensuring data integrity.
(4) Anti-replay: In the digital signature, if a technology such as adding a sequence number and a timestamp to a signature packet is used, a replay attack can be avoided.
(5) Anti-repudiation: As described above, the digital signature can be used to authenticate the identity and cannot be forged. Therefore, provided that the signed packet is kept, it seems that a manually signed contract text is kept, that is, evidence is kept, a signer cannot repudiate.
(6) Confidentiality (security): With confidentiality guarantee, an interception attack is invalid. A manually signed file (like a text) is not confidential. Once the file is lost, information in the file is very likely to be disclosed. The digital signature can be used to encrypt a to-be-signed message. Certainly, if the signed packet does not require confidentiality, the packet may not be encrypted.

Signature verification means that an information receiver uses a public key to verify whether data or a file released by an owner of a private key is complete and whether an information source is accurate. For example, the owner of the private key encrypts to-be-sent data (or digest information of to-be-sent data) by using the private key, and then sends the to-be-sent data and a ciphertext to the receiver, where the ciphertext is a signature of the data. The receiver decrypts the ciphertext by using the public key, and verifies whether data obtained after the decryption is consistent with data received by the receiver (or digest information generated based on the received data) from the private key owner. If the data is consistent, the verification succeeds, indicating that the received data information is complete and accurate, and it may be determined that the data is sent by the private key owner. In this application, signature check may also be referred to as signature verification, and a verification success may also be referred to as a check success.

### 2. Public key infrastructure (public key infrastructure, PKI), certificate, and certificate authority

The public key infrastructure (public key infrastructure, PKI) is configured to generate, manage, store, distribute, and revoke a key and a digital certificate (certificate) based on public and private keys. The public key and private key are respectively used to encrypt and generate a digital signature. The public key may be sent to a network, and the private key has to be stored inside the owner. A digital certificate is digital authentication information identifying an identity of a party and ownership of a public key in digital communication. In this patent, the digital certificate may also be referred to as a certificate for short. Briefly, the certificate identifies a user, and is similar to an ID card, which identifies identity information of a citizen. The PKI is used to issue an identity certificate and verify that the identity certificate is valid, and is similar to a public security bureau, which issues a citizen ID card and proves that the ID card is valid and information is correct with the credibility of the public security bureau.

A typical PKI system includes one or more certificate authorities (certificate authority, CA). The CA is responsible for managing an entire service cycle of the public key, including issuing a certificate, defining a validity period of the certificate, and revoking the certificate. It should be noted that the CA may further include a registration authority (registration authority, RA). The RA is configured to send a certificate issuing request to the CA after obtaining and authenticating a user identity. The RA may be a function integrated in the CA, or may be deployed independently. In the present invention, it is assumed that the CA integrates a function of the RA. To facilitate certificate management, the PKI system hierarchy is a tree structure.

FIG. 2 shows an example of a tree structure of a PKI system hierarchy. In a PKI architecture, whether any two network elements can trust each other is depending on whether certificates held by the two network elements are issued by a common trusted termination point. For example, in FIG. 2, the common trusted termination point is a root CA. A plurality levels of leaf CAs (that is, other CAs other than the root CA in FIG. 2) are arranged under the root CA based on a deployment. The root CA is responsible for issuing a certificate to the root CA (a self-signed certificate) and leaf CAs of a lower level (for example, a CA-A and a CA-B in FIG. 2). Then, the leaf CAs of a lower level issue certificates to CAs of a lower level of the leaf CAs. For example, CAs of a lower level of the CA-A are a CA-A1 and a CA-A2. The rest may be deduced by analogy. Finally, a leaf CA at a last level issues a certificate to a network element. For example, a CA-B1 issues a certificate to a network element B1.

The tree-shaped PKI architecture has the following features: (1) As the trust termination point of all network elements, the root CA needs to be deployed at an absolutely secure position to ensure security isolation and minimize communication interactions. (2) An application scope of certificates may be divided by using a plurality of levels of CAs. For example, different leaf CAs are used to deliver certificates to network elements in Beijing and Shanghai, or different leaf CAs are used to deliver certificates to network elements of public services and private services. (3) When a leaf CA is attacked, the entire PKI architecture does not fail or break down, ensuring stability of the entire PKI system.

A procedure in which a user requests a leaf CA to issue a certificate is as follows:

The user locally generates a public key and a private key that match each other and sends the public key and identity information of the user to the CA. The CA determines whether to issue a certificate to the user. If the CA determines to issue a certificate to the user, the CA generates a certificate and uses a private key of the CA to generate a digital signature for the certificate. The certificate includes at least information listed in Table 1.

**Table 1**

| Information name | Information function |
|---|---|
| Certificate identity (identity, ID) | Identity information of a certificate |
| ID of a CA issuing the certificate | Identity information of the CA issuing the certificate |
| ID of a certificate owner | Identity information of the certificate owner |
| Public key of the certificate owner | Public key of the certificate owner, where after receiving the certificate, a message receiver uses the public key to verify a digital signature of a message. |
| Certificate validity period | The certificate validity period is a time period in which the certificate is valid. The certificate becomes invalid after the time period. |
| Certificate signature | Digital signature information generated by signing the certificate by the CA issuing the certificate using the CA private key |

The user obtains, from the CA, the certificate issued by the CA for the user, and obtains an address for querying certificate revocation information and certificate chain information from the CA. Querying the address of the certificate revocation may be querying an online certificate status protocol (online certificate status protocol, OCSP) or a certificate revocation list (certificate revocation list, CRL) recording the certificate revocation information. The certificate chain is used to display from the bottom layer of leaf CAs to the root CA in sequence, to show another network element how to find a common trust termination point in sequence. For example, a certificate of a network element A1 and a certificate of a network element B1 in FIG. 2 are respectively issued by the CA-A1 and the CA-B1, and the certificate of the network element A1 and the certificate of the network element B1 cannot independently display a common trust termination point. In this case, the certificate chain needs to be used to show that the common trust termination point is the root CA, that is, for the network element A1, the certificate chain is {CA-A1 certificate, CA-A certificate, root CA certificate}; and for the network element B1, the certificate chain is {CA-B1 certificate, CA-B certificate, root CA certificate}.

### 3. CA in a core network

The core network defines the following types of certificate issuing authorities, and one CA can play a plurality of roles.

A security gateway (security gateway, SEG) CA: a CA that issues an end entity certificate to an SEG in a specific operator domain, which is configured to interact with an SEG in another domain or interact with a network element in a local domain.

A network element (network element, NE) CA: a CA that issues an end entity IPsec certificate to a network element in the specific operator domain. The certificate issued by the NE CA should be restricted to a Zb interface. The network element CA is configured to interact with another NE or SEG.

A transport layer security (transport layer security, TLS) protocol client CA: a CA that issues an end entity TLS client certificate to a TLS entity in the specific operator domain, which is configured to establish a TLS connection between a client (client) and a server (server).

A TLS server CA: a CA that issues an end entity TLS server certificate to a TLS entity in the specific operator domain.

An interconnection (interconnection) CA: a CA that issues, on behalf of a specific operator, cross-certificates to an SEG CA, a TLS client CA, and a TLS server CA in another domain with which SEG and TLS entities of the specific operator are interconnected.

Unless the operator chooses to combine CAs, each security domain has at least one SEG CA, NE CA, TLS client CA, or TLS server CA, and one dedicated interconnection CA.

### 4. Supplier certificate and operator certificate

Both an NF and a base station obtain operator certificates based on a certificate management protocol version v2 (certificate management protocol v2, CMPv2). After being instantiated or delivered, the NF and the base station both carry the supplier certificates provided by the supplier. After deploying the NF or the base station, the operator needs to replace the supplier certificates with operator certificates. The operator certificate of the NF is a wildcard certificate configured on the NF during network element instantiation. The operator certificate of the base station is configured by the supplier on the base station during production of the base station. The NF and the base station may obtain the operator certificates from the CA by using the supplier certificates.

### 5. NF certificate profile (Profile)

An NF may include a plurality of certificates. A TLS certificate is used as an example. The TLS certificate includes but is not limited to the following parameters: (1) an issuer name (issuer name); (2) a certificate name (subject name); (3) an issuer key identifier (issuer public key identifier); (4) an NF key identifier (NF public key identifier); and (5) a subject alias (subjectAltname): an NF instance identifier (instance ID) and an NF type (NF type).

A profile of another certificate included in the NF is similar to that of the TLS certificate. In this embodiment of this application, the TLS certificate is used as an example for description. The method provided in this application may be further applicable to the another certificate, and is generally described herein.

### 6. NF profile (Profile)

The NF profile is generated and configured by operation, administration and maintenance (operation, administration and maintenance, OAM) for an NF. The NF profile includes but is not limited to the following parameters: an NF instance ID, an NF type, a fully qualified domain name (fully qualified domain name, FQDN)/IP address (IP address), and the like. The NF instance ID, the NF type, the FQDN/IP address, and the like may be used to apply for a certificate.

Currently, in a certificate application process, a parameter related to the NF profile is very easily impersonated or tampered with by a malicious NF, and there is a security risk.

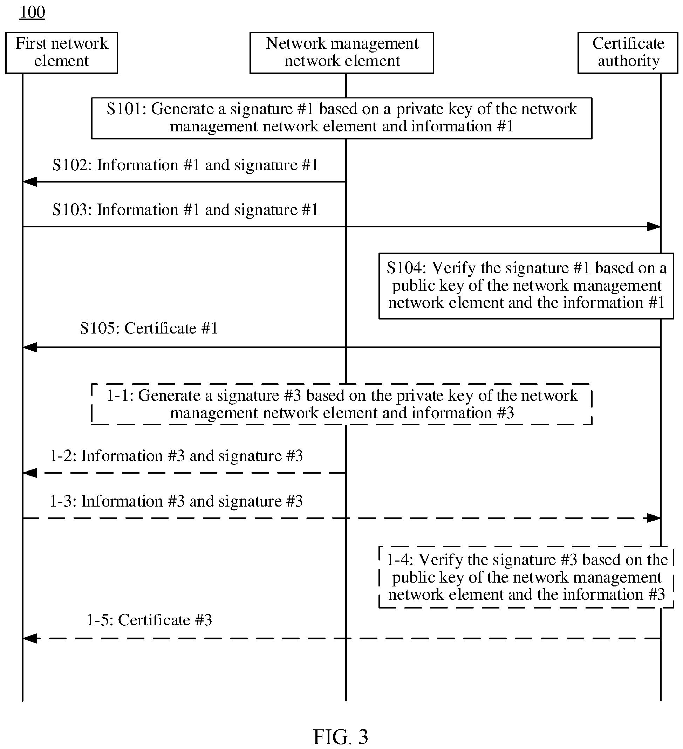

With reference to FIG. 3 to FIG. 8, secure communication methods 100 to 400 provided in this application are described in detail below.

FIG. 3 is a diagram of a secure communication method 100 according to this application. In the method 100, a first request message (referred to as a request message #1 in the method 100) sent by a first network element when the first network element requests a first certificate (referred to as a certificate #1 in the method 100) from a certificate issuing network element includes first information (referred to as information #1 in the method 100) and a first signature (referred to as a signature #1 in the method 100). The signature #1 is generated by a network management network element, and is used to prevent the information #1 in the request message from being tampered with or impersonated.

S101: The network management network element generates the signature #1 based on a private key of the network management network element and the information #1.

The information #1 is used to profile the first network element. In other words, the information #1 is associated with the first network element; or the information #1 is information about the first network element.

In an example 1, the information #1 includes a first instance identifier of the first network element. The information #1 further includes at least one of the following information: a first type of the first network element, a first fully qualified domain name of the first network element, a first public land mobile network identifier, or a first network slice identifier. The first instance identifier identifies the first network element, for example, may be an NF instance ID. The first type of the first network element indicates a type of the first network element (for example, an NF type). For example, the first type may be an AMF, an SMF, or a service control point (service control point, SCP). The first fully qualified domain name (FQDN) of the first network element indicates an address of the first network element. The public land mobile network identifier (PLMN ID) indicates a network area, for example, a security domain, in which the first network element is located. The first network slice identifier indicates a network slice served by the first network element.

S102: The network management network element sends the information #1 and the signature #1 to the first network element; and correspondingly, the first network element receives the information #1 and the signature #1 from the network management network element.

The information #1 and information included in the signature #1 correspond to those in S101.

After receiving the information #1, the first network element generates a public key #1 and a private key #1. The public key #1 is a public key that is generated by the first network element and that is in a private key/public key pair to be registered with the certificate issuing network element, and a private key corresponding to the public key #1 is referred to as the private key #1. The public key #1 and the private key #1 correspond to the certificate #1, and the public key #1 may be used to generate the certificate #1.

S103: The first network element sends the information #1 and the signature #1 to the certificate issuing network element; and correspondingly, the certificate issuing authority receives the information #1 and the signature #1 from the first network element.

The information #1 is used to obtain the certificate #1, and the certificate #1 is used to prove an identity of the first network element.

Specifically, the first network element may send the request message #1 to the certificate issuing network element; and correspondingly, the certificate issuing network element receives the request message #1 from the first network element. The first request message includes the information #1 and the signature #1, and the request message #1 is used to request the certificate #1.

Optionally, the request message #1 may further include the public key #1. When sending the public key #1 to the certificate issuing network element, the first network element further sends a random number and a random number signature that is generated by signing the random number based on the private key #1. The certificate issuing network element may verify the random number signature based on the public key #1 to determine whether the private key corresponding to the public key #1 belongs to the first network element. For a specific verification method, refer to the method for verifying the signature #1 in S104.

Optionally, the first network element sends first indication information to the certificate issuing network element, where the first indication information is used to obtain information used to verify the signature #1. For example, the first indication information herein may indicate a public key of the network management network element, or the first indication information herein may indicate how to obtain a public key of the network management network element, for example, providing a related certificate chain.

S104: The certificate issuing network element verifies the signature #1 based on the public key of the network management network element and the information #1.

In an example verification manner, the certificate issuing network element performs decryption calculation on the signature #1 based on the public key of the network management network element to obtain information #1', and then compares whether the information #1' is the same as the information #1. If the information #1' is the same as the information #1, the verification succeeds. If the information #1' is different from the information #1, the verification fails. If the verification succeeds, it can be proved that the information #1 is configured by the network management network element for the first network element and is not tampered with by the first network element.

S105: When the verification succeeds, the certificate issuing network element sends the certificate #1 to the first network element based on the information #1; and correspondingly, the first network element receives the certificate #1 from the certificate issuing network element.

Specifically, the certificate #1 may be generated based on the information #1. The certificate #1 may include the information #1.

Specifically, the certificate issuing network element receives the public key of the first network element from the first network element, and the certificate issuing network element may generate the certificate #1 based on the information #1 and the public key of the first network element.

Optionally, when the certificate issuing network element is jointly deployed by a plurality of certificate authorities, the first network element may further send a type of the certificate #1 to the certificate issuing network element, and the certificate issuing network element issues the certificate #1 based on the type of the certificate #1.

It should be noted that, in this application, the certificate issuing network element and the first network element may directly communicate with each other, or communicate with each other by using another network element (for example, the network management network element). This is not limited in this application, and details are not described again below.

Optionally, the first network element further obtains information #2 (referred to as information #2 in the method 100). The information #2 includes at least one of the following: an identifier of the certificate issuing network element (referred to as an identifier #1 of the certificate issuing network element in the method 100) or first duration (referred to as duration #1 in the method 100). The identifier of the certificate issuing network element is used to send the information #1 and the signature #1 to the certificate issuing network element. The first duration is used to determine a validity period of the certificate #1. For example, the first network element sends the information #1 and the signature #1 to the certificate issuing network element based on the identifier of the certificate issuing network element. For another example, the certificate issuing network element determines the validity period of the certificate #1 based on the duration #1, or may determine the validity period of the certificate #1 without referring to the duration #1. The first network element may receive the information #2 from the network management network element.

Optionally, the first network element receives the information #2 from the network management network element, and the signature #1 is generated based on the private key of the network management network element, the information #1, and the information #2. Alternatively, the first network element receives the information #2 and a signature #2 from the network management network element, and the signature #2 is generated based on the private key of the network management network element and the information #2. The first network element further sends second indication information to the certificate issuing network element, where the second indication information is used to obtain information used to verify the signature #2. For example, the second indication information herein may indicate the public key of the network management network element, or the second indication information herein may indicate how to obtain the public key of the network management network element, for example, providing a related certificate chain.

For example, when the information #2 includes the identifier of the certificate issuing network element, the certificate issuing network element may further compare the identifier of the certificate issuing network element in the information #2 with the identifier of the certificate issuing network element. If the identifier of the certificate issuing network element in the information #2 is consistent with the identifier of the certificate issuing network element, it may be further proved that the first network element applies for a certificate #3 based on the identifier of the certificate issuing network element determined by the network management network element, further improving communication security of the secure communication method 100.

For details about how the network management network element determines the identifier of the certificate issuing network element for the first network element, refer to the description corresponding to S201 in the method 200.

Optionally, the information #2 may further include a timestamp #1 and a random number #1, which are used for anti-replay. For descriptions of the timestamp #1 and the random number #1, refer to the corresponding content in S201.

For details of S101 to S105, refer to the related descriptions in the method 200.

Based on this embodiment of this application, the network management network element signs the first information to obtain the first signature, and sends the first signature to the first network element, where the first information is used to request the first certificate that can authenticate the identity of the first network element. When requesting the certificate from the certificate issuing network element, the first network element sends the first signature. The certificate issuing network element verifies the first signature to determine whether the first network element impersonates or tampers with the first information. In this way, a problem that the first network element can still apply for the first certificate when the first network element impersonates or tampers with the first information can be avoided, improving communication security.

It should be understood that after the information #1 is updated, the network management network element sends third information (referred to as information #3 in the method 100) and a third signature (referred to as signature #3 in the method 100) to the first network element. The first network element needs to send the information #3 and the signature #3 to the certificate issuing network element to apply for a second certificate (referred to as the certificate #3 in the method 100).

Optionally, the method 100 further includes the following steps.

Step 1-1: The network management network element generates the signature #3 based on the private key of the network management network element and the information #3.

The information #3 is used to profile the first network element, and the signature #3 is generated based on the private key of the network management network element and the information #3.

When one or more parameters in the information #1 are updated, in a possible implementation, the information #3 may be updated information #1; and in another possible implementation, the information #3 may be an updated parameter in the information #1.

The information #3 includes at least one of the following: a second instance identifier, a second type, a second fully qualified domain name, a second internet protocol identifier, a second public land mobile network identifier, or a second network slice identifier. The second instance identifier identifies the first network element. The second type indicates a type of the first network element. The second fully qualified domain name or the second internet protocol identifier indicates an address of the first network element. The public land mobile network identifier indicates a network area in which the first network element is located. The second network slice identifier indicates a network slice served by the first network element.

It should be noted that when the second type and the first type are the same (the first type is not updated), certificate issuing network elements for issuing the certificate #1 and the certificate #3 are the same. When the second type is an updated first type, certificate issuing network elements for issuing the certificate #1 and the certificate #3 may be different. An example in which the certificate issuing network elements for issuing the certificate #1 and the certificate #3 are the same is used below for description.

Step 1-2: The network management network element sends the information #3 and the signature #3 to the first network element; and correspondingly, the first network element receives the information #3 and the signature #3 from the network management network element.

After receiving the information #3, the first network element generates a public key #3 and a private key #3. The public key #3 is a public key that is generated by the first network element and that is in a private key/public key pair to be registered with the certificate issuing network element, and a private key corresponding to the public key #3 is referred to as the private key #3. The public key #3 and the private key #3 correspond to the certificate #3.

Step 1-3: The first network element sends the information #3 to the certificate issuing authority; and correspondingly, the certificate issuing authority receives the information #3 from the first network element.

The information #3 is used to obtain the certificate #3. The certificate #3 is used to prove the identity of the first network element.

Alternatively, the first network element sends a second request message (referred to as a request message #2 in the method 100) to the certificate issuing network element; and correspondingly, the certificate issuing network element receives the request message #2 from the first network element. The first request message includes the information #3 and the signature #3, and the request message #2 is used to request the certificate #3. The request message #2 further includes the public key #3.

In a possible implementation, the information #3 may be updated information #1. Optionally, the first network element sends a cause value to the certificate issuing network element; and correspondingly, the certificate issuing authority receives the cause value from the first network element. The cause value indicates that the first information is updated. In another possible implementation, the information #3 may be an updated parameter in the information #1. For example, the first fully qualified domain name in the information #1 is updated, the information #3 includes the second fully qualified domain name, and the second fully qualified domain name is different from the first fully qualified domain name.

Step 1-4: The certificate issuing network element verifies the signature #3 based on the public key of the network management network element and the information #3.

Optionally, the first network element sends third indication information to the certificate issuing network element, where the third indication information is used to obtain information used to verify the signature #3.

For a specific description, refer to S104. A difference lies in that the information #1 and the signature #1 are respectively replaced with the information #3 and the signature #3.

Step 1-5: When the verification succeeds, the certificate issuing network element sends the certificate #3 to the first network element based on the information #3; and correspondingly, the first network element receives the certificate #3 from the certificate issuing network element.

For example, the certificate #3 may be generated based on the information #1 and the information #3.

Optionally, the first network element sends a type of the certificate #3 to the certificate issuing network element. The certificate issuing network element sends the certificate #3 to the first network element based on a type of the certificate #2.

Optionally, the first network element sends the third indication information to the certificate issuing network element, where the third indication information is used to obtain the information used to verify the third signature. For the third indication information herein, refer to the related description of the first indication information. Details are not described herein again.

Optionally, the first network element may further obtain fourth information (referred to as information #4 in the method 100). The information #4 includes at least one of the following: the identifier of the certificate issuing network element or second duration (referred to as duration #2 in the method 100). The identifier of the certificate issuing network element is used to send the information #3 and the signature #3 to the certificate issuing network element. The duration #2 indicates a validity period of the certificate #3. For example, the first network element sends the information #3 and the signature #3 to the certificate issuing network element based on the identifier of the certificate issuing network element. For another example, the certificate issuing network element determines the validity period of the certificate #3 based on the duration #2, or may determine the validity period of the certificate #3 without referring to the duration #2.

For example, the first network element may receive the information #4 from the network management network element. For example, the first network element receives the information #4 from the network management network element, and the signature #3 is generated based on the private key of the network management network element, the information #1, and the information #4. Alternatively, the first network element receives the information #4 and a signature #4 from the network management network element, and the signature #4 is generated based on the private key of the network management network element and the information #4. The first network element further sends fourth indication information to the certificate issuing network element, where the fourth indication information is used to obtain information used to verify the signature #4. For example, the fourth indication information herein may indicate the public key of the network management network element, or the fourth indication information herein may indicate how to obtain the public key of the network management network element, for example, providing a related certificate chain.

For example, when the information #4 includes the identifier of the certificate issuing network element, the certificate issuing network element may further compare the identifier of the certificate issuing network element in the information #4 with the identifier of the certificate issuing network element. If the identifier of the certificate issuing network element in the information #4 is consistent with the identifier of the certificate issuing network element, it may be further proved that the first network element applies for the certificate #3 based on the identifier of the certificate issuing network element determined by the network management network element, further improving the communication security of the secure communication method 100.

Optionally, the information #4 may further include a timestamp #4 and a random number #4, which are used for anti-replay.

Through step 1-1 and step 1-2, when the information #1 changes, the first network element needs to request, based on the information #3, the certificate issuing network element to update the certificate. Through step 1-1 to step 1-5 similar to steps S101 to S105, a problem that the first network element can still apply for the first certificate when the first network element impersonates or tampers with the information #3 can be reduced, improving the communication security of the first network element.

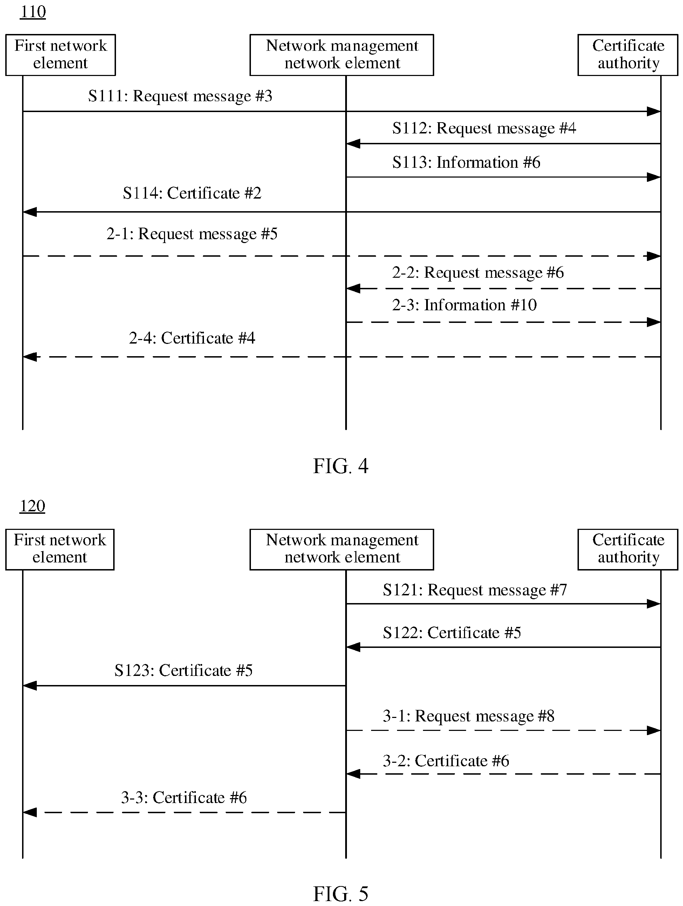

FIG. 4 is a diagram of a secure communication method 110 according to this application. In the method 110, a first network element sends a first request message (referred to as a request message #3 in the method 110) to a certificate issuing network element to request a first certificate (referred to as a certificate #2 in the method 110), where the first request message includes first information (referred to as information #5 in the method 110). The certificate issuing network element sends a third request message (referred to as a request message #4 in the method 110) to a network management network element to request to verify the information #5. When the verification succeeds, the certificate issuing network element sends the certificate #2 to the first network element.

S111: The first network element sends the request message #3 to the certificate issuing network element; and correspondingly, the certificate issuing network element receives the request message #3 from the first network element.

The request message #3 includes the information #5. The information #5 includes information used to profile the first network element. The first request message is used to request the certificate #2. The certificate #2 is used to prove an identity of the first network element. For details about the information used to profile the first network element, refer to the description of the foregoing information #1. Details are not described herein again.

The information #5 may be preconfigured on the first network element, may be received by the first network element from another network element (for example, the network management network element), or may be generated based on information received from another network element (for example, the network management network element). The following provides a possible example.

Example 3: The first network element receives third information (referred to as information #7 in the method 110) from the network management network element, and the first network element determines the information #5 based on the information #7. It should be understood that the first network element determining the information #5 based on the information #7 may include the following several examples. Example 3-1: The first network element determines, based on the information that is used to profile the first network element and that is included in the information #7, the information that is used to profile the first network element and that is included in the information #5. For example, the information #7 includes a first instance identifier of the first network element, a first type of the first network element, a first fully qualified domain name of the first network element, and a first public land mobile network identifier. The information #5 determined by the first network element may include one or more of the foregoing information. Example 3-2: The information #7 further includes an identifier of the certificate issuing network element (referred to as an identifier #2 of the certificate issuing network element in the method 110), the first network element sends the first request message to the certificate issuing network element based on the identifier of the certificate issuing network element, and the information #5 determined by the first network element may include the identifier of the certificate issuing network element. Optionally, the network management network element may determine the identifier of the certificate issuing network element based on the first type and the first public land mobile network identifier. Example 3-3: The information #7 further includes first duration (referred to as duration #3 in the method 110), the duration #3 is used to determine a validity period of the certificate #2, and the information #5 determined by the first network element may include the duration #3. Example 3-4: The information #7 further includes a type of the first certificate, and the information #5 determined by the first network element may include the type of the first certificate.

After receiving the information #7 from the network management network element, the first network element generates a public key #2 and a private key #2. The public key #2 is a public key that is generated by the first network element and that is in a private key/public key pair to be registered with the certificate issuing network element, and a private key corresponding to the public key #2 is referred to as the private key #2. The public key #2 and the private key #2 correspond to the certificate #2. The request message #3 may include the public key #2, and the public key #2 is used by the certificate issuing network element to generate the certificate #2.

S112: The certificate issuing network element sends the request message #4 to the network management network element; and correspondingly, the network management network element receives the request message #4 from the certificate issuing network element.

The request message #4 includes the information #5, and the request message #4 is used to request to verify the information #5.

Example 4: After receiving the request message #4, the network management network element verifies the information #5. Examples of a verification manner are as follows: Example 4-1: The information #5 includes the first instance identifier, and the information #5 further includes a timestamp #2 and a random number #2. The network management network element may compare whether the timestamp #2 and the random number #2 are consistent with a timestamp #2' and a random number #2' that are carried in the information #7. If the timestamp #2 and the random number #2 are consistent with the timestamp #2' and the random number #2' that are carried in the information #7, the verification succeeds. If the timestamp #2 and the random number #2 are not consistent with the timestamp #2' and the random number #2' that are carried in the information #7, the verification fails. Example 4-2: The information #5 includes the first instance identifier, and further includes at least one of the following: a first type of the first network element, a first fully qualified domain name of the first network element, or a first public land mobile network identifier. For example, the information #5 further includes the first type of the first network element. The network management network element finds, based on the first instance identifier in the information #5, a first type' of the first network element corresponding to the first instance identifier. The first type' is compared with the first type in the information #5. If the first type' is consistent with the first type in the information #5, the verification succeeds. If the first type' is not consistent with the first type in the information #5, the verification fails. In example 4-2, optionally, the network management network element stores a correspondence between the first type' and the first instance identifier. For another example, the information #7 includes the first instance identifier and the first type', and it may be understood that the information #7 implicitly indicates the correspondence between the first instance identifier and the first type'. The network management network element may verify the first fully qualified domain name or the first public land mobile network identifier of the first network element in a manner similar to that in example 4-2 to determine whether the verification succeeds. Details are not described herein again. Example 4-3: The information #5 includes the duration #3, and the network management network element compares stored corresponding duration #3' with the duration #3. If the stored corresponding duration #3' is the same as the duration #3, the verification succeeds. If the stored corresponding duration #3' is different from the duration #3, the verification fails.

It should be noted that at least two of examples 4-1, 4-2, and 4-3 may be combined.

S113: The network management network element sends second information (referred to as information #6 in the method 110) to the certificate issuing network element; and correspondingly, the certificate issuing network element receives the information #6 from the network management network element.

The information #6 indicates a verification result (referred to as a verification result #1 in the method 110). It should be understood that the information #6 indicating the verification result may mean that the information #6 explicitly indicates the verification result #1 or implicitly indicates the verification result #1. The following provides descriptions by using several examples.

Example 5-1: The information #6 explicitly indicates the verification result #1, and the information #6 may directly indicate, based on the verification status in S112, whether the verification succeeds or fails. For example, corresponding to example 4-1 in S112, when the verification succeeds, the information #6 directly indicates that the verification succeeds. Optionally, the information #6 may further indicate one or more parameters other than the first instance identifier in the information #7. For details about the indication manner, refer to the solution 1 in the method 300. For another example, corresponding to example 4-2 in S112, when the verification succeeds, the information #6 directly indicates that the verification succeeds. For details about the indication manner, refer to the solution 2 in the method 300.

Example 5-2: The information #6 implicitly indicates the verification result #1. For example, corresponding to example 4-1 in S112, when the verification succeeds, the information #6 indicates one or more parameters in the information #7 other than the first instance identifier. After receiving the information #6, the certificate issuing network element may determine that the verification succeeds, and use the information #6 to generate the certificate #2. For another example, corresponding to example 4-2 in S112, when the verification succeeds, a parameter included in the information #6 is the same as a parameter included in the information #5, and the certificate issuing network element may determine that the verification succeeds after receiving the information #6.

Specifically, if determining that the verification of the information #5 succeeds, the certificate issuing network element may determine that a parameter in the certificate request message #2 is not tampered with and may be used to generate a certificate. If determining that the verification of the information #5 fails, the certificate issuing network element determines that a parameter in the request message #3 is tampered with and cannot be used to generate a certificate. If the verification fails, S114 is not performed.

S114: When the verification succeeds, the certificate issuing network element sends the certificate #2 to the first network element; and correspondingly, the first network element receives the certificate #2 from the certificate issuing network element.

Specifically, the certificate #2 may be generated based on the information #5. The certificate #2 may include the information #5.

Optionally, when the certificate issuing network element is jointly deployed by a plurality of certificate authorities, the first network element may further send a type of the certificate #2 to the certificate issuing network element, and the certificate issuing network element issues the certificate #2 based on the type of the certificate #2.

It should be noted that, in this application, the certificate issuing network element and the first network element may directly communicate with each other, or communicate with each other by using another network element (for example, the network management network element). This is not limited in this application, and details are not described again below.

Optionally, the information #5 further includes at least one of the following: the identifier of the certificate issuing network element (referred to as the identifier #2 of the certificate issuing network element the method 110) or the first duration (referred to as the duration #3 in the method 110). The identifier of the certificate issuing network element is used by the first network element to send the information #5 to the certificate issuing network element. The duration #3 is used to determine the validity period of the certificate #2. For example, the first network element sends the information #5 to the certificate issuing network element based on the identifier of the certificate issuing network element. For another example, the certificate issuing network element determines the validity period of the certificate #2 based on the duration #3, or may determine the validity period of the certificate #2 without referring to the duration #3.

For details about how the network management network element determines the identifier of the certificate issuing network element for the first network element, refer to the description corresponding to S201 in the method 200.

Optionally, the information #5 may further include a timestamp #2 and a random number #2, which are used for anti-replay.

Based on this embodiment of this application, the first network element sends the first information to the certificate issuing network element, where the first information is used to apply for the first certificate. The certificate issuing network element sends the first information to the network management network element. After verification performed by the network management network element on the first information succeeds, the certificate issuing network element issues the first certificate to the first network element. By verifying the first information by the network management network element, a problem that the first network element can still apply for the first certificate when the first network element impersonates or tampers with the first information can be reduced, improving communication security of the first network element.

It should be understood that after the information #5 is updated, the first network element needs to send a second request message (referred to as a request message #5 in the method 110) to the certificate issuing network element to apply for a second certificate (referred to as a certificate #4 in the method 110). The request message #5 includes fourth information (referred to as information #8 in the method 110).

Optionally, the method 110 further includes the following steps.

Step 2-1: The first network element sends a second request message #2 to the certificate issuing network element based on the identifier of the certificate issuing network element (referred to as the identifier #2 of the certificate issuing network element in the method 110); and correspondingly, the certificate issuing network element receives the request message #5 from the first network element.

The request message #5 includes the information #8. The information #8 includes information used to profile the first network element. The request message #5 is used to request the second certificate. The certificate #4 is used to prove the identity of the first network element. For example, one or more parameters in the information #5 are updated. In a possible implementation, the information #8 may be updated information #5. In another possible implementation, the information #8 may be an updated parameter in the information #5.

Example 6: The information used to profile the first network element in the information #8 includes at least one of the following information: a second instance identifier of the first network element, a second instance identifier of the first network element, a second type of the first network element, a second fully qualified domain name of the first network element, or a second public land mobile network identifier.

It should be noted that when the second type and the first type are the same (the first type is not updated), certificate issuing network elements for issuing the certificate #2 and the certificate #4 are the same. When the second type is an updated first type, certificate issuing network elements for issuing the certificate #2 and the certificate #4 may be different. An example in which the certificate issuing network elements for issuing the certificate #2 and the certificate #4 are the same is used below for description.

The information #8 may be preconfigured on the first network element, may be received by the first network element from another network element (for example, the network management network element), or may be generated based on information received from another network element (for example, the network management network element). The following provides a possible example.

Example 7: The first network element receives sixth information (referred to as information #9 in the method 110) from the network management network element, and the first network element determines the information #8 based on the information #9. It should be understood that the first network element determining the information #8 based on the information #9 may include the following several examples. Example 7-1: The first network element determines, based on the information that is used to profile the first network element and that is included in the information #9, the information that is used to profile the first network element and that is included in the information #8. For example, the information #9 includes a second instance identifier of the first network element, a second type of the first network element, a second fully qualified domain name of the first network element, and a second public land mobile network identifier. The information #8 determined by the first network element may include one or more of the foregoing information. Example 7-2: The information #9 further includes an identifier of the certificate issuing network element (referred to as an identifier #2 of the certificate issuing network element in the method 110), the first network element sends the first request message to the certificate issuing network element based on the identifier of the certificate issuing network element, and the information #8 determined by the first network element may include the identifier of the certificate issuing network element. Optionally, the network management network element may determine the identifier of the certificate issuing network element based on the second type and the second public land mobile network identifier. Example 7-3: The information #9 further includes second duration (referred to as duration #4 in the method 110), the duration #4 is used to determine a validity period of the certificate #4, and the information #8 determined by the first network element may include the duration #4. Example 7-4: The information #9 further includes a type of the second certificate, and the information #8 determined by the first network element may include the type of the second certificate.

After receiving the information #8, the first network element generates a public key #4 and a private key #4. The public key #4 is a public key that is generated by the first network element and that is in a private key/public key pair to be registered with the certificate issuing network element, and a private key corresponding to the public key #4 is referred to as the private key #4. The public key #4 and the private key #4 correspond to the certificate #4.

Step 2-2: The certificate issuing network element sends a fourth request message (referred to as a request message #6 in the method 110) to the network management network element; and correspondingly, the network management network element receives the request message #6 from the certificate issuing network element.

The request message #6 includes the information #8, and the request message #6 is used to request to verify the information #8. The request message #6 includes the public key #4.

Optionally, the request message #6 includes a cause value #2, and the cause value #2 indicates that the information #5 is updated, or the cause value #2 indicates that the information #8 is updated information #5.

After receiving the request message #6, the network management network element verifies the information #8. Alternatively, after receiving the request message #6, the network management network element first determines the updated information #5 based on the information #5 and the information #8, and then verifies the updated information #5. For a verification manner, refer to the manner in which the network management network element verifies the information #5 in S112.

Step 2-3: The network management network element sends information #10 (referred to as information #10 in the method 110) to the certificate issuing network element; and correspondingly, the certificate issuing network element receives the information #10 from the network management network element.

The information #10 indicates a verification result (referred to as a verification result #2 in the method 110).

For a specific description, refer to S113. A difference lies in that the verification result #1 is replaced with the verification result #2, the request message #4 is replaced with the request message #6, the request message #3 is replaced with the request message #5, the information #5 is replaced with the information #8, and the information #6 is replaced with the information #10.

Step 2-4: When the verification succeeds, the certificate issuing network element sends the certificate #4 to the first network element.

For a specific description, refer to the description of step 1-5. A difference lies in that the information #1 is replaced with the information #5, the information #3 is replaced with the information #8, the certificate #3 is replaced with the certificate #2, and the duration #2 is replaced with the duration #4.

In the foregoing solution, when the information used to profile the first network element changes, the first network element needs to request, based on the second information, the certificate issuing network element to update the certificate. By using a method similar to S111 to S114, a problem that the first network element can still apply for the first certificate when the first network element impersonates or tampers with the first information can be reduced, improving communication security of the first network element.

FIG. 5 is a diagram of a secure communication method 120 according to this application. In the method 120, a network management network element sends a first request message (referred to as a request message #7 in the method 120) to a certificate issuing network element to request a first certificate (referred to as a certificate #5 in the method 120) for a first network element. After the CA sends the first certificate to the network management network element, the network management network element sends the certificate #5 to the first network element.

S121: The network management network element sends the request message #7 to the certificate issuing network element; and correspondingly, the certificate issuing network element receives the request message #7 from the network management network element.

The request message #7 includes first information (referred to as information #11 in the method 120), the request message #7 is used to request the certificate #5 for the first network element, the information #11 includes information used to profile the first network element, and the certificate #5 is used to prove an identity of the first network element.

The request message #7 further includes a first public key and a first private key of the first network element. The first public key and the first private key may be generated by the first network element, and the first network element further sends the first public key to the network management network element (for details, refer to the another possible implementation of the method 400); or the first public key and the first private key are generated by the network management network element for the first network element, and the network management network element further sends the first private key to the first network element (for details, refer to the method 400).

The information used to profile the first network element in the information #11 includes at least one of the following: a first instance identifier of the first network element, a first type of the first network element, a first fully qualified domain name of the first network element, or a public land mobile network identifier. For related descriptions of these parameters, refer to the descriptions corresponding to S101. Details are not described herein again.

Optionally, the network management network element further sends a signature of the request message #7 to the certificate issuing network element, where the signature is generated based on the request message #7 and a private key of the network management network element. The certificate issuing network element verifies the signature based on the request message #7 and a public key of the network management network element, and performs S122 if the verification succeeds. For a specific verification process, refer to the related description in the method 400. For example, the first network element further sends first indication information to the certificate issuing network element, where the first indication information is used to obtain information used to verify the signature of the request message #7. For example, the first indication information herein may indicate the public key of the network management network element, or the first indication information herein may indicate how to obtain the public key of the network management network element, for example, providing a related certificate chain.

Optionally, before S121, the network management network element determines the certificate issuing network element for the first network element based on a type of the first network element and/or a public land mobile network identifier, to determine an identifier #3 of the certificate issuing network element. For a specific manner, refer to the description corresponding to S401 in the method 400.

Optionally, the request message #7 further includes duration #5, and the duration #5 is used to determine a validity period of the certificate #5.

S122: The certificate issuing network element sends the certificate #5 to the network management network element; and correspondingly, the network management network element receives the certificate #5 from the certificate issuing network element.

For details, refer to the description of S105. A difference lies in that the certificate #1 is replaced with the certificate #5.

S123: The network management network element sends the certificate #5 to the first network element; and correspondingly, the first network element receives the certificate #5 from the network management network element.

Optionally, when the first public key and the first private key are generated by the network management network element, the network management network element further needs to send the first private key to the first network element.

Specifically, the certificate #5 may be generated based on information #11. The certificate #5 may include the information #11.

Optionally, when the certificate issuing network element is jointly deployed by a plurality of certificate authorities, the first network element may further send a type of the certificate #5 to the certificate issuing network element, and the certificate issuing network element issues the certificate #5 based on the type of the certificate #5.

Optionally, when the request message #7 includes first duration (referred to as the duration #5 in the method 120), the certificate issuing network element determines a validity period of the certificate #5 based on the duration #5, or may determine a validity period of the certificate #5 without referring to the duration #5.

Based on this embodiment of this application, the network management network element applies to the certificate issuing network element for a certificate for the first network element, so that the first network element can be prevented from impersonating or tampering with information used to generate the certificate, improving communication security.

It should be understood that after the information #11 is updated, the network management network element sends a second request message (referred to as a request message #8 in the method 120) to the certificate issuing network element to apply for a second certificate (referred to as a certificate #6 in the method 120).

Optionally, the method 120 further includes the following steps.

Step 4-1: The network management network element sends the request message #8 to the certificate issuing network element; and correspondingly, the certificate issuing network element receives the request message #8 from the network management network element.

The request message #8 includes second information (referred to as information #12 in the method 120), the request message #8 is used to request the certificate #6 for the first network element, the certificate #6 is used to prove the identity of the first network element, and the information #12 includes the information used to profile the first network element. For example, one or more parameters in the information #11 are updated. In a possible implementation, the information #12 may be updated information #11. In another possible implementation, the information #11 may be an updated parameter in the information #12.

Optionally, the request message #8 includes a cause value #3, and the cause value #3 indicates that the information #11 is updated, or the cause value #3 indicates that the information #12 is updated information #11.

For example, the information used to profile the first network element in the information #12 includes at least one of the following information: a second instance identifier of the first network element, a second instance identifier of the first network element, a second type of the first network element, a second fully qualified domain name of the first network element, or a second public land mobile network identifier.

It should be noted that when the second type and the first type are the same (the first type is not updated), certificate issuing network elements for issuing the certificate #5 and the certificate #6 are the same. When the second type is an updated first type, certificate issuing network elements for issuing the certificate #5 and the certificate #6 may be different. An example in which the certificate issuing network elements for issuing the certificate #5 and the certificate #6 are the same is used below for description.

Optionally, the information #12 may further include the identifier of the certificate issuing network element (referred to as the identifier #3 of the certificate issuing network element in the method 120) and/or second duration (referred to as duration #6 in the method 120), and the duration #6 may be used to determine a validity period of the certificate #6. For details about how the network management network element determines the certificate issuing network element for the first network element and determines the identifier of the certificate issuing network element, refer to the description corresponding to S401 in the method 400.

Optionally, the information #12 may further include a timestamp #6 and a random number #6, which are used for anti-replay.

The request message #8 further includes a second public key and a second private key of the first network element. The second public key and the second private key may be generated by the first network element, and the first network element further sends the second public key to the network management network element; or the second public key and the second private key are generated by the network management network element for the first network element, and the network management network element further sends the second private key to the first network element.

Optionally, the network management network element further sends a signature of the request message #8 to the certificate issuing network element, where the signature is generated based on the request message #8 and the private key of the network management network element. The certificate issuing network element verifies the signature based on the request message #8 and the public key of the network management network element, and performs step 4-2 if the verification succeeds. For a specific verification process, refer to the related description of verifying the signature in the method 400. For example, the first network element further sends second indication information to the certificate issuing network element, where the second indication information is used to obtain information used to verify the signature of the request message #8. For example, the second indication information herein may indicate the public key of the network management network element, or the second indication information herein may indicate how to obtain the public key of the network management network element, for example, providing a related certificate chain.

Step 4-2: The certificate issuing network element sends the second certificate to the network management network element; and correspondingly, the network management network element receives the second certificate from the certificate issuing network element.

For a specific description, refer to step 1-5. A difference lies in that the information #1 is replaced with the information #11, the information #2 is replaced with the information #12, the certificate #1 is replaced with the certificate #5, the certificate #2 is replaced with the certificate #6, the duration #1 is replaced with the duration #5, and the duration #2 is replaced with the duration #6.

Step 4-3: The network management network element sends the certificate #6 to the first network element; and correspondingly, the first network element receives the certificate #6 from the network management network element.

For a specific description, refer to the description of step 1-5. A difference lies in that the information #1 is replaced with the information #11, the information #3 is replaced with the information #12, the certificate #3 is replaced with the certificate #6, and the duration #2 is replaced with the duration #6.

Optionally, when the second public key and the second private key are generated by the network management network element, the network management network element further needs to send the second private key to the first network element.

The foregoing solution has beneficial effects similar to those of S121 to S123 when the foregoing solution is used to describe a change of the information about of first network element.

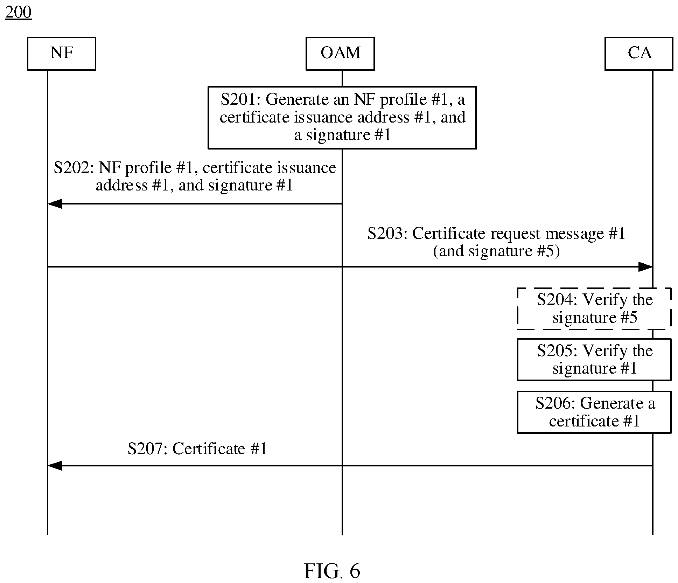

FIG. 6 is a diagram of a secure communication method 200 according to this application. The method 200 may be a possible implementation of S101 to S105 in the method 100. In the method 200, an example in which a first network element is an NF, a network management network element is an OAM, and a certificate issuing network element is a CA is used for description; and an example in which a request message #1 is a certificate request message #1 is used for description.

S201: The OAM generates an NF profile #1, an identifier #1 of the certificate issuing network element, and a signature #1 for the NF.

The NF may use the NF profile #1 to request a certificate #1 from the CA #1 for the NF in a subsequent step. The certificate #1 is used by the NF to perform mutual identity authentication when the NF communicates with another NF. For example, the NF may request a TLS server certificate from a TLS server CA by using the NF profile #1. When an NF #2 requests to establish a communication connection to the NF, the NF may send the TLS server certificate to the NF #2, and the NF #2 verifies an identity of the NF by using the TLS server certificate. For another example, the NF may request a TLS client certificate from a TLS client CA by using the NF profile #1. When the NF requests to establish a communication connection to an NF #2, the NF may send the TLS client certificate to the NF #2, and the NF #2 verifies the identity of the NF by using the TLS client certificate. The NF profile #1 includes parameters such as an NF instance identifier, an NF type, an FQDN/IP address, and a public land mobile network (public land mobile network, PLMN) ID #1 that are used to request a certificate. The NF instance identifier identifies the NF. The NF type indicates a type of the NF, for example, an AMF, an SMF, or an SCP. The FQDN/IP address indicates an identifier of the NF. The PLMN ID #1 may be used to determine a network area (for example, a security domain) in which the NF is located.

The identifier #1 of the certificate issuing network element herein is an identifier of the CA #1, and indicates one or more CAs from which the NF should request the certificate #1. An example of how the OAM determines the identifier #1 of the certificate issuing network element is described as follows: First, the OAM may determine, based on an NF type #1 included in the NF profile #1, a network element type of the NF and certificates that need to be applied for. For example, if the NF type indicates that the NF is an AMF, the TLS server certificate and the TLS client certificate are applied for the NF. For another example, if the NF type indicates that the NF is a service control point (service control point, SCP), the TLS client certificate is applied for the NF. Alternatively, the NF may be another network element. This is not limited in this application. Then, a CA in the network area in which the NF is located is determined based on the network area in which the NF is located. For example, there may be only one SEG CA, one NE CA, one TLS client CA or one TLS server CA, and one dedicated interconnection CA in one security domain. In this case, a certificate issuing authority may be determined based on the security domain corresponding to the PLMN ID. Then, the CA #1 that can issue the certificate #1 to the NF is determined based on the CA in the network area in which the NF is located. For example, if the NF type #1 included in the NF profile #1 indicates that the NF is an AMF and is located in an area corresponding to the PLMN ID #1, certificate issuing authorities are identified as the TLS server CA and the TLS client CA that are located in the area corresponding to the PLMN ID #1. Finally, the identifier #1 of the certificate issuing network element is determined. It should be understood that identifiers of all CAs are preconfigured in the OAM. The OAM determines, from the identifiers, an identifier of a certificate that may be obtained by the NF, and generates, based on the identifiers, the identifier #1 of the certificate issuing network element.

This application provides the following example about how the OAM generates the signature #1. The OAM signs the information #1 and the identifier #1 of the certificate issuing network element by using a private key of an OAM certificate to generate the signature #1. The information #1 includes parameters such as the NF instance ID #1, the NF type #1, the FQDN #1, and the PLMN ID #1 in the NF profile #1. Optionally, the information #1 may further include another parameter in the NF profile #1. This is not limited in this application. For example, the OAM certificate is issued by an operator root (Root) CA, and the operator root CA is a trusted root of all operator certificates in an entire network.

Optionally, the OAM further generates first duration #1. For example, the first duration #1 may be generated based on the type of the NF and a network plan of the OAM for the NF. For example, to temporarily relieve a network load, the OAM instantiates the NF. It may be understood that when the network load decreases, the NF may be destroyed, and the first duration #1 is also shorter. For example, the first duration #1 is less than or equal to a threshold #1. For another example, to be used for a long-term network service, the OAM instantiates the NF, and the first duration #1 may be longer. For example, the first duration #1 is greater than or equal to a threshold #2. Optionally, the threshold #2 may be greater than the threshold #1. Correspondingly, the OAM generates the signature #1 by using the first duration #1, the information #1, the identifier #1 of the certificate issuing network element, and the private key of the OAM certificate. In a subsequent step, the CA#1 can also determine a validity period of the certificate #1 based on the first duration #1.

Optionally, the OAM further generates a timestamp (timestamp) #1 and a random number (nonce) #1. Correspondingly, the OAM generates the signature #1 by using the timestamp #1, the random number #1, the information #1, the identifier #1 of the certificate issuing network element, and the private key of the OAM certificate, or the OAM generates the signature #1 by using the timestamp #1, the random number #1, the information #1, the identifier #1 of the certificate issuing network element, the first duration #1, and the private key of the OAM certificate. The timestamp #1 is a time at which the OAM sends the NF profile #1 to the NF. The random number #1 is a unique value in a unit time. The unit time herein is a time at which the parameter sent in S201 expires relative to the timestamp #1, and is generally set to a time period (for example, 60s or 120s) after the time shown in the timestamp #1. Duration of the unit time may be set by a network. The timestamp #1 and the random number #1 are used for anti-replay in this embodiment of this application. Details are not described in the following similar solutions again.

It should be noted that if the NF needs to apply for a plurality of certificates from a plurality of CAs, when the plurality of CAs are jointly deployed, the CA #1 may be understood as the plurality of jointly deployed CAs. In this case, the certificate request message #1 sent by the NF to the CA #1 may be used to apply for the plurality of certificates, and the certificate #1 may be understood as the plurality of certificates or one of the plurality of certificates. That is, applying for the certificate #1 from the CA #1 may be understood as applying for one or more certificates from the CA #1. If the NF needs to apply for a plurality of certificates from a plurality of CAs, when the plurality of CAs are independently deployed, the CA #1 may be understood as one of the plurality of CAs, and the certificate #1 may be understood as one certificate provided by the CA #1. The certificate request message #1 sent by the NF to the CA #1 is used to request the certificate #1. In addition, the NF may further apply to another CA for a certificate that can be provided by the another CA.

S202: The OAM sends the NF profile #1, the identifier #1 of the certificate issuing network element, and the signature #1 to the NF; and correspondingly, the NF receives the NF profile #1, the identifier #1 of the certificate issuing network element, and the signature #1 from the OAM.

Optionally, the OAM further sends the first duration #1 to the NF; and correspondingly, the NF receives the first duration #1 from the OAM.

Optionally, the OAM further sends the timestamp #1 and the random number #1 to the NF; and correspondingly, the NF receives the timestamp #1 and the random number #1 from the OAM.

It should be understood that the NF may determine, based on the identifier #1 of the certificate issuing network element, to apply for a certificate from the certificate issuing authority CA #1 (one or more CAs). An example in which the NF applies for a certificate from one CA is used below for description.

S203: The NF sends the certificate request message #1 to the CA based on the identifier #1 of the certificate issuing network element; and correspondingly, the CA receives the certificate request message #1 from the NF.

The certificate request message #1 is used to request the certificate #1 from the CA. A signature #5 is a signature of the certificate request message #1.

The certificate request message #1 includes the information #1, a public key #1, and the signature #1. The public key #1 is a public key that is generated by the NF and that is in a private key/public key pair to be registered with the CA, and a private key corresponding to the public key #1 is referred to as a private key #1.

Optionally, the certificate request message #1 may further include the first duration #1. Optionally, when the NF carries an initial certificate, the certificate request message #1 may further include the initial certificate. For example, the initial certificate is a certificate configured on the NF by a supplier during NF instantiation. For example, the initial certificate may be understood as "4. Supplier certificate and operator certificate" in the foregoing description. Optionally, the certificate request message #1 may further include the timestamp #1 and the random number #1.

For example, the NF may directly send the certificate request message #1 to the CA, or may send the certificate request message #1 to the CA via the OAM or another network element. This is not limited in this application.

Optionally, when the NF carries the initial certificate, the NF may use a private key in the initial certificate to sign the certificate request message #1 to generate the signature #5, and send the signature #5 and the certificate request message #1 to the CA together.

For example, the NF may directly send the certificate request message #1 and the signature #5 to the CA, or may send the certificate request message #1 and the signature #5 to the CA via the OAM or another network element. This is not limited in this application.

Optionally, when the NF sends the signature #5 to the CA in S203, the CA verifies the signature #5 in S204.

The CA verifies the signature #5 based on the certificate request message #1 and a public key in the initial certificate. If the verification succeeds, it indicates that the message is sent by the NF and is not tampered with in a sending process. In an example verification manner, the CA performs decryption calculation on the signature #5 based on the public key in the initial certificate to obtain a message #1', and then compares whether the certificate request message #1 is the same as the message #1'. If the certificate request message #1 is the same as the message #1', the verification succeeds. If the certificate request message #1 is different from the message #1', the verification fails.

Optionally, before S204, the NF may verify validity of the initial certificate by using a public key in a supplier root certificate, and perform S204 after the verification succeeds. It should be understood that similar to the certificate chain mentioned above, the NF may be understood as a network element A1, the initial certificate may be understood as a CA-A1 certificate in the certificate chain, the CA may be understood as a network element B1, and the supplier root certificate may be understood as a root CA certificate in the certificate chain. The initial certificate carries a private key signature of the supplier root certificate. The CA verifies the private key signature by using the public key in the supplier root certificate. For example, the supplier root certificate is preconfigured in the CA.

S205: The CA verifies the signature #1.

The CA verifies the signature #1 based on a public key in the OAM certificate and another parameter in the certificate request message #1 other than the signature #1. In an example verification manner, the CA performs decryption calculation on a signature #7 based on the public key in the OAM certificate to obtain information #1", and then compares whether the information #1 is the same as the information #1'. If the information #1 is the same as the information #1", the verification succeeds. If the information #1 is different from the information #1", the verification fails.

If the verification succeeds, it indicates that a parameter in the signature #1 is configured by the OAM for the NF and is not tampered with by the NF. For example, the public key in the OAM certificate is pre-configured in the CA, and a trust relationship has been established between the OAM and the CA.

Optionally, the CA performs decryption calculation on the signature #7 based on the public key in the OAM certificate to obtain information #1" and at least one of the following: an identifier #1' of the certificate issuing network element, first duration #1', a timestamp #1', or a random number #1'. If the identifier #1' of the certificate issuing network element is the same as the identifier #1 of the certificate issuing network element, it indicates that the NF requests the certificate from the CA based on the identifier #1 of the certificate issuing network element configured by the OAM. If the first duration #1' is the same as the first duration #1, it indicates that the NF has not tampered with the first duration #1. If the timestamp #1' and the random number #1' are the same as the timestamp #1 and the random number #1, it indicates that the parameter sent by the OAM to the NF is not under a replay attack.

For example, when the information #1 includes the identifier of the certificate issuing network element, the CA may further compare the identifier of the certificate issuing network element in information obtained by decrypting the information #1 and/or the signature #1 with the identifier of the CA. If the identifiers are consistent, it may be further proved that the NF applies for the certificate #1 based on the identifier of the certificate issuing network element determined by the OAM, further improving communication security of the secure communication method 200.

S206: The CA generates the certificate #1.

The CA generates the certificate #1 for the NF based on the information #1 and the public key #1.

Optionally, when the certificate request message #1 includes the first duration #1, the CA generates the certificate #1 for the NF based on the information #1, the public key #1, and the first duration #1. The CA may set the validity period for the certificate #1 based on the first duration #1. Alternatively, the CA may not set the validity period based on the first duration #1.

S207: The CA sends the certificate #1 to the NF; and correspondingly, the NF receives the certificate #1 from the CA.

The certificate #1 may include the NF profile #1 and the public key #1.

For example, the certificate #1 may be understood as the operator certificate in the part "4. Supplier certificate and operator certificate" in the foregoing description.

For example, the CA may directly send the certificate #1 to the NF, or may send the certificate #1 to the NF via the OAM or another network element. This is not limited in this application.

In this embodiment of this application, integrity protection is provided for a parameter such as an NF profile, so that a problem that the NF can still apply for the first certificate when the NF impersonates or tampers with the first information can be reduced, improving the communication security.

For beneficial effects of methods 300 and 400, refer to beneficial effects of the method 200. Details are not described below again.

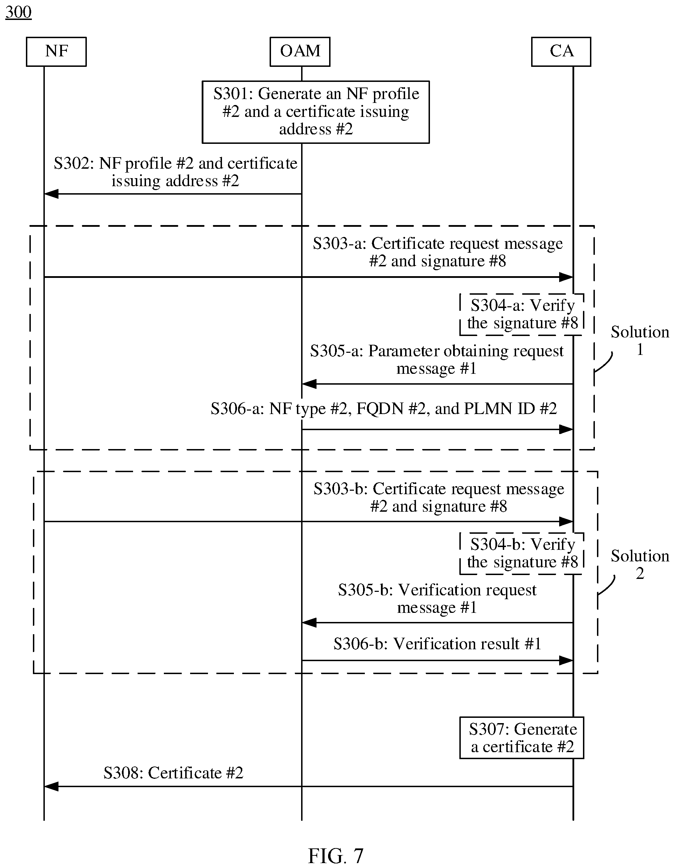

FIG. 7 is a diagram of a secure communication method 300 according to this application. The method 300 may be a possible implementation of S111 to S114 in the method 110. In the method 300, an example in which a first network element is an NF, a network management network element is an OAM, and a certificate issuing network element is a CA is used for description; and an example in which a request message #3 is a certificate request message #2, information #5 is a parameter in the certificate request message #2, and a first public key and a first private key are respectively a public key #2 and a private key #2 is used for description.

S301: The OAM generates an NF profile #2 and an identifier #2 of the certificate issuing network element for the NF.

Optionally, the OAM further generates a timestamp #2 and a random number #2 for anti-replay.

For S301, refer to the related description of generating, by the OAM, the NF profile #1, the identifier #1 of the certificate issuing network element, the first duration #1, the timestamp #1, and the random number #1 for the NF in S201. A difference lies in that the NF profile #1 is replaced with the NF profile #2, the certificate #1 is replaced with the certificate #2, the identifier #1 of the certificate issuing network element is replaced with the identifier #2 of the certificate issuing network element, the first duration #1 is replaced with first duration #2, and the timestamp #1 and the random number #1 are replaced with the timestamp #2 and the random number #2.

It should be noted that if the NF needs to apply for a plurality of certificates from a plurality of CAs, when the plurality of CAs are jointly deployed, the CA #2 may be understood as the plurality of jointly deployed CAs. In this case, the certificate request message #2 sent by the NF to the CA #2 may be used to apply for the plurality of certificates, and the certificate #2 may be understood as the plurality of certificates or one of the plurality of certificates. That is, applying for the certificate #2 from the CA #2 may be understood as applying for one or more certificates from the CA #2. If the NF needs to apply for a plurality of certificates from a plurality of CAs, when the plurality of CAs are independently deployed, the CA #2 may be understood as one of the plurality of CAs, and the certificate #2 may be understood as a certificate provided by the CA #2. The certificate request message #2 sent by the NF to the CA #2 is used to request the certificate #2. In addition, the NF may further apply to another CA for a certificate that can be provided by the another CA.

S302: The OAM sends the NF profile #2 and the identifier #2 of the certificate issuing network element to the NF; and correspondingly, the NF receives the NF profile #2 and the identifier #2 of the certificate issuing network element from the OAM.

Optionally, the OAM sends the first duration #2 to the NF; and correspondingly, the NF receives the first duration #2 from the OAM.

Optionally, the OAM sends the timestamp #2 and the random number #2 to the NF; and correspondingly, the NF receives the timestamp #2 and the random number #2 from the OAM.

In S303 to S306, the NF requests the certificate #2 from the CA, and sends, to the CA, parameters used to request the certificate #2; and the OAM verifies security of these parameters. S303 to S306 may be implemented in a plurality of manners. The following describes two possible solutions.

### Solution 1:

S303-a: The NF sends the certificate request message #2 to the CA based on the identifier #2 of the certificate issuing network element; and correspondingly, the CA receives the certificate request message #2 from the NF.

The certificate request message #2 is used to request the certificate #2 from the CA.

The certificate request message #2 includes a parameter #2 and a public key #2. For example, the parameter #2 includes only an NF instance ID #2, and the NF instance ID #2 identifies the NF. The public key #2 is a public key that is generated by the NF and that is in a private key/public key pair to be registered with the CA, and a private key corresponding to the public key #2 is referred to as the private key #2.

Optionally, when the NF carries an initial certificate, the certificate request message #2 may further include the initial certificate. For example, the initial certificate is a certificate configured on the NF by a supplier during NF instantiation. For example, the initial certificate may be understood as "4. Supplier certificate and operator certificate" in the foregoing description. Optionally, the certificate request message #2 may further include the timestamp #2 and the random number #2.

For example, the NF may directly send the certificate request message #2 to the CA, or may send the certificate request message #2 to the CA via the OAM or another network element. This is not limited in this application.

Optionally, when the NF carries the initial certificate, the NF may use a private key in the initial certificate to sign the certificate request message #2 to generate a signature #8, and send the signature #8 and the certificate request message #2 to the CA together. For example, the NF may directly send the certificate request message #2 and the signature #8 to the CA, or may send the certificate request message #2 and the signature #8 to the CA via the OAM or another network element. This is not limited in this application.

Optionally, in S303-a, when the NF sends the signature #8 to the CA, in S304-a, the CA verifies the signature #8. For details, refer to the description in S204. A difference lies in that the signature #2 is replaced with the signature #8.

S305-a: The CA sends a parameter obtaining request message #1 to the OAM; and correspondingly, the OAM receives the parameter obtaining request message #1 from the CA.

The parameter obtaining request message #1 includes the NF instance ID #2. The parameter obtaining request message #1 is used to request, from the OAM, a parameter used to generate the certificate #2.

For example, after receiving the parameter obtaining request message #1, the OAM finds the corresponding NF profile #2 based on the NF instance ID #2 in the parameter obtaining request message #1. A correspondence between the NF profile #2 and the NF instance ID #2 is stored in the OAM. The OAM obtains, from the NF profile #2, a parameter used to generate the certificate #2, including an NF type #2, an FQDN #2, and a PLMN ID #2.

Optionally, the parameter obtaining request message #1 may further include the timestamp #2 and the random number #2.

S306-a: The OAM sends, to the CA, the parameter used to generate the certificate #2; and correspondingly, the CA receives, from the OAM, the parameter used to generate the certificate #2.

The parameter used to generate the certificate #2 includes the NF type #2, the FQDN #2, and the PLMN ID #2.

Optionally, the OAM sends the first duration #2 to the CA; and correspondingly, the CA receives the first duration #2 from the OAM.

### Solution 2:

S303-b: For a specific description, refer to S303-a. A difference lies in that the parameter #2 in S303-b further includes the NF type #2, the FQDN #2, and the PLMN ID #2.

Optionally, the certificate request message #2 further includes the first duration #2.

S304-b: For a specific description, refer to S304-a.

S305-b: The CA sends a verification request message #1 to the OAM; and correspondingly, the OAM receives the verification request message #1 from the CA.

The verification request message #1 includes all parameters in the certificate request message #2. The verification request message #1 is used to request to verify a parameter in the verification request message #1.

Optionally, the verification request message #1 may further include the timestamp #2 and the random number #2.

For example, after receiving the verification request message #1, the OAM finds the corresponding NF profile #2 based on the NF instance ID #2 in the verification request message #1. It should be understood that the OAM stores a correspondence between the NF profile #2 and the NF instance ID #2. The OAM obtains, from the NF profile #2, a parameter used to generate the certificate #2, including an NF type #2', an FQDN #2', and a PLMN ID #2', and compares the NF type #2', the FQDN #2', and the PLMN ID #2' with the NF type #2, the FQDN #2, and the PLMN ID #2 to determine whether the NF type #2', the FQDN #2', and the PLMN ID #2' are the same as the NF type #2, the FQDN #2, and the PLMN ID #2. The verification succeeds if the NF type #2', the FQDN #2', and the PLMN ID #2' are the same as the NF type #2, the FQDN #2, and the PLMN ID #2. The verification fails if the NF type #2', the FQDN #2', and the PLMN ID #2' are different from the NF type #2, the FQDN #2, and the PLMN ID #2.

Optionally, the OAM compares stored corresponding first duration #2' with the first duration #2. If the stored corresponding first duration #2' is the same as the first duration #2, the verification succeeds. If the stored corresponding first duration #2' is different from the first duration #2, the verification fails.

S306-b: The OAM sends a verification result #1 to the CA; and correspondingly, the CA receives the verification result #1 from the OAM.

For example, in S305-b, if the parameter in the verification request message #1 is successfully verified by the OAM, the verification result #1 sent by the OAM to the CA carries a verification success indication, indicating that the parameter in the certificate request message #2 is not tampered with and may be used to generate a certificate. If the parameter in the verification request message #1 fails to be verified by the OAM, the verification result #1 carries a verification failure indication, indicating that the parameter in the certificate request message #2 is tampered with and cannot be used to generate a certificate.

S307: The CA generates the certificate #2.

The CA generates the certificate #2 for the NF based on the NF instance ID #2, the NF type #2, the FQDN #2, the PLMN ID #2, and the public key #2.

Optionally, when the CA further obtains the first duration #2, the CA generates the certificate #2 for the NF based on the NF instance ID #2, the NF type #2, the FQDN #2, the PLMN ID #2, the public key #2, and the first duration #2. The CA may set a validity period for the certificate #2 based on the first duration #2. The CA may set a validity period for the certificate #1 based on the first duration #1. Alternatively, the CA may not set a validity period based on the first duration #1.

For details of S308, refer to S207. A difference lies in that the certificate #1 is replaced with the certificate #2, and the NF profile #1 and the public key #1 are respectively replaced with the NF profile #2 and the public key #2.

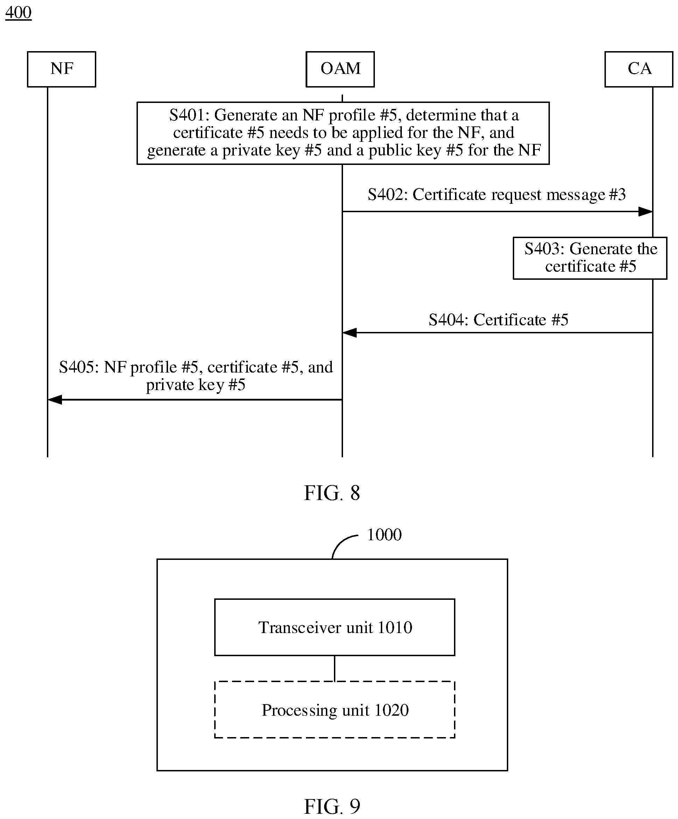

FIG. 8 is a diagram of a secure communication method 400 according to this application. The method 400 is a possible implementation of S121 to S123 in the method 120. In the method 400, an example in which a first network element is an NF, a network management network element is an OAM, and a certificate issuing network element is a CA is used for description; and an example in which a request message #7 is a certificate request message #3, information #11 is a parameter in the certificate request message #3, a signature of the request message #7 is a signature #10, a first certificate #3 is a certificate #5, and a first public key and a first private key are respectively a public key #5 and a private key #5 is used for description.

S401: After instantiating the NF, the OAM generates an NF profile #5, the private key #5, and the public key #5 for the NF.

The NF profile #5 includes parameters such as an NF instance ID #5, an NF type #5, an FQDN #5, and a PLMN ID #5. The public key #5 is a public key that is generated by the OAM for the NF and that is in a private key/public key pair to be registered with the CA. A private key corresponding to the public key #5 is referred to as the private key #5.

The OAM may apply for the certificate #5 by using the NF profile #5 and the public key #5 in a subsequent step. The certificate #5 is used for mutual identity authentication when the NF communicates with another NF. The NF profile #5 includes parameters such as an NF instance identifier, an NF type, an FQDN/IP address, and a public land mobile network (public land mobile network, PLMN) ID #5 that are used to request a certificate. The NF instance identifier identifies the NF. The NF type indicates a type of the NF, for example, an AMF, an SMF, or an SCP. The FQDN/IP address indicates an identifier of the NF. The PLMN ID #5 may be used to determine a network area (for example, a security domain) in which the NF is located.

The identifier #5 of the certificate issuing network element herein is an identifier of the CA #5, and indicates one or more CAs from which the NF should request the certificate #5. An example of how the OAM determines the identifier #5 of the certificate issuing network element is described as follows: First, the OAM may determine, based on an NF type #5 included in the NF profile #5, a network element type of the NF and certificates that need to be applied for. For example, if the NF type indicates that the NF is an AMF, a TLS server certificate and a TLS client certificate are applied for the NF. For another example, if the NF type indicates that the NF is a service control point (service control point, SCP), a TLS client certificate is applied for the NF. Alternatively, the NF may be another network element. This is not limited in this application. Then, a CA in the network area in which the NF is located is determined based on the network area in which the NF is located. For example, there may be only one SEG CA, one NE CA, one TLS client CA or one TLS server CA, and one dedicated interconnection CA in one security domain. In this case, a certificate issuing authority may be determined based on the security domain corresponding to the PLMN ID. Then, the CA #5 that can issue the certificate #5 to the NF is determined based on the CA in the network area in which the NF is located. For example, if the NF type #5 included in the NF profile #5 indicates that the NF is an AMF and is located in an area corresponding to the PLMN ID #5, certificate issuing authorities are identified as the TLS server CA and the TLS client CA that are located in the area corresponding to the PLMN ID #5. Finally, the identifier #5 of the certificate issuing network element is determined. It should be understood that identifiers of all CAs are preconfigured in the OAM. The OAM determines, from the identifiers, an identifier of a certificate that may be obtained by the NF, and generates, based on the identifiers, the identifier #5 of the certificate issuing network element.

Optionally, the OAM further generates first duration #3. For example, the first duration #3 may be generated based on the type of the NF and a network plan of the OAM for the NF. For example, to temporarily relieve a network load, the OAM instantiates the NF. It may be understood that when the network load decreases, the NF may be destroyed, and the first duration #3 is also shorter. For example, the first duration #3 is less than or equal to a threshold #3. For another example, to be used for a long-term network service, the OAM instantiates the NF, and the first duration #3 may be longer. For example, the first duration #3 is greater than or equal to a threshold #4. Optionally, the threshold #4 may be greater than the threshold #3. In a subsequent step, the CA #5 can also determine a validity period of the certificate #5 based on the first duration #3.

Optionally, the OAM further generates a timestamp (timestamp) #5 and a random number (nonce) #5. The timestamp #5 is a time at which the OAM sends the NF profile #5 to the NF. The random number #5 is a unique value in a unit time. The unit time herein is a time at which the parameter sent in S201 expires relative to the timestamp #5, and is generally set to a time period (for example, 60s or 120s) after the time shown in the timestamp #5. Duration of the unit time may be set by a network. The timestamp #5 and the random number #5 are used for anti-replay in this embodiment of this application. Details are not described in the following similar solutions again.

It should be noted that if the NF needs to apply for a plurality of certificates from a plurality of CAs, when the plurality of CAs are jointly deployed, the CA #5 may be understood as the plurality of jointly deployed CAs. In this case, the certificate request message #3 sent by the NF to the CA #5 may be used to apply for the plurality of certificates, and the certificate #5 may be understood as the plurality of certificates or one of the plurality of certificates. That is, applying for the certificate #5 from the CA #5 may be understood as applying for one or more certificates from the CA #5. If the NF needs to apply for a plurality of certificates from a plurality of CAs, when the plurality of CAs are independently deployed, the CA #5 may be understood as one of the plurality of CAs, and the certificate #5 may be understood as a certificate provided by the CA #5. The certificate request message #3 sent by the NF to the CA #5 is used to request the certificate #5. In addition, the NF may further apply to another CA for a certificate that can be provided by the another CA.

S402: The OAM sends the certificate request message #3 to the CA; and correspondingly, the CA receives the certificate request message #3 from the OAM.

The certificate request message #3 is used to request the certificate #5 for the NF. The certificate request message #3 includes a parameter #5 and a public key #5. The parameter #5 includes the NF instance ID #5, the NF type #5, the FQDN #5, and the PLMN ID #5 in the NF profile #5.

Optionally, the certificate request message #3 may further include the first duration #3.

Optionally, the certificate request message #3 may further include the timestamp #5 and the random number #5.

For example, the OAM may directly send the certificate request message #3 to the CA, or may send the certificate request message #3 to the CA via a proxy (proxy) or another network element. This is not limited in this application.

S403: The CA generates the certificate #5.

For details, refer to the description in S206. A difference lies in that the information #1, the public key #1, and the certificate #1 are respectively replaced with the parameter #5, the public key #5, and the certificate #5. The first duration #1 is replaced with the first duration #3.

S404: The CA sends the certificate #5 to the OAM; and correspondingly, the OAM receives the certificate #5 from the CA.

The certificate #5 may include the NF profile #5 and the public key #5.

For example, the CA may directly send the certificate #5 to the OAM, or may send the certificate #5 to the OAM via a proxy or another network element. This is not limited in this application.

S405: The OAM sends the NF profile #5, the certificate #5, and the private key #5 to the NF; and correspondingly, the NF receives the NF profile #5, the certificate #5, and the private key #5 from the OAM.

Optionally, the method 400 may further include the following steps.

In S402, the OAM further sends a signature #11 to the CA; and correspondingly, the CA further receives the signature #11 from the OAM.

The signature #11 is generated based on a private key in the OAM and the certificate request message #3.

This application provides the following example about how the OAM generates the signature #11. The OAM signs the parameter #5 and the identifier #5 of the certificate issuing network element by using the private key in the OAM certificate to generate the signature #11. The parameter #5 includes parameters such as the NF instance ID #5, the NF type #5, the FQDN #5 and the PLMN ID #5 in the NF profile #5. Optionally, the parameter #5 may further include another parameter in the NF profile #5. This is not limited in this application. For example, the OAM certificate is issued by an operator root (Root) CA, and the operator root CA is a trusted root of all operator certificates in an entire network.

Optionally, the OAM generates the signature #11 by using the first duration #3, the parameter #5, the identifier #5 of the certificate issuing network element, and the private key in the OAM certificate.

Optionally, the OAM generates the signature #11 by using the timestamp #5, the random number #5, the parameter #5, the identifier #5 of the certificate issuing network element, and the private key in the OAM certificate; or the OAM generates the signature #11 by using the timestamp #5, the random number #5, the parameter #5, the identifier #5 of the certificate issuing network element, the first duration #3, and the private key in the OAM certificate.

Before S403, the CA further verifies the signature #11 by using the private key in the OAM and the certificate request message #3, and performs S403 when the verification succeeds. For a verification manner, refer to the manner in which the CA verifies the signature #1 in S205. A difference lies in that the certificate request message #1 is replaced with the certificate request message #3, and the signature #1 is replaced with the signature #11.

The method 400 may further have another possible implementation. A difference lies in that the private key #5 and the public key #5 that are generated by the OAM in S401 are replaced with a public key #5 and a private key #5 that are generated by the NF. In addition, before S402, the OAM sends the NF profile #5 to the NF; and correspondingly, the NF receives the NF profile #5 from the OAM. Subsequently, the NF sends the generated public key #5 to the OAM; and correspondingly, the OAM receives the public key #5 from the NF. Therefore, in S402, the public key #5 carried in the certificate request message #3 is generated by the NF instead of the OAM.

FIG. 9 is a diagram of a secure communication apparatus 1000 according to an embodiment of this application. The apparatus 1000 includes a transceiver unit 1010. The transceiver unit 1010 may be configured to implement a corresponding communication function. The transceiver unit 1010 may also be referred to as a communication interface or a communication unit.

Optionally, the apparatus 1000 may further include a processing unit 1020. The processing unit 1020 may be configured to process data.

Optionally, the apparatus 1000 further includes a storage unit. The storage unit may be configured to store instructions and/or data. The processing unit 1020 may read the instructions and/or the data in the storage unit, so that the apparatus implements actions performed by the communication device (for example, the terminal device or the network device) in the foregoing method embodiments.

The apparatus 1000 may be configured to perform actions performed by the communication device (for example, the first network element, the network management network element, or the certificate issuing network element) in the foregoing method embodiments. In this case, the apparatus 1000 may be a component of the communication device (for example, the first network element, the network management network element, or the certificate issuing network element). The transceiver unit 1010 is configured to perform receiving and sending-related operations on a side of the communication device (for example, the first network element, the network management network element, or the certificate issuing network element) in the foregoing method embodiments. The processing unit 1020 is configured to perform a processing-related operation on the side of the communication device (for example, the first network element, the network management network element, or the certificate issuing network element) in the foregoing method embodiments.

In a design, the apparatus 1000 is configured to perform actions performed by the first network element in the foregoing method embodiments.

It should be understood that a specific process of performing the foregoing corresponding step by each unit is described in detail in the foregoing method embodiments. For brevity, details are not described herein again.

In another design, the apparatus 1000 is configured to perform actions performed by the network management network element in the foregoing method embodiments.

It should be understood that a specific process of performing the foregoing corresponding step by each unit is described in detail in the foregoing method embodiments. For brevity, details are not described herein again.

In another design, the apparatus 1000 is configured to perform actions performed by the certificate issuing network element in the foregoing method embodiments.

It should be understood that a specific process of performing the foregoing corresponding step by each unit is described in detail in the foregoing method embodiments. For brevity, details are not described herein again.

It should be further understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a combination logic circuit, and/or another appropriate component that supports a described function. In an optional example, a person skilled in the art may understand that the apparatus 1000 may be specifically the terminal device in the foregoing embodiments, and may be configured to perform procedures and/or steps corresponding to the terminal device in the foregoing method embodiments; or the apparatus 1000 may be specifically the network device in the foregoing embodiments, and may be configured to perform procedures and/or steps corresponding to the network device in the foregoing method embodiments. To avoid repetition, details are not described herein again.

The apparatus 1000 in each of the foregoing solutions has functions of implementing the corresponding steps performed by the terminal device in the foregoing methods, or the apparatus 1000 in each of the foregoing solutions has functions of implementing the corresponding steps performed by the network device in the foregoing methods. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver); and another unit, for example, the processing unit, may be replaced by a processor to separately perform a sending and receiving operation and a related processing operation in the method embodiments.

In addition, the transceiver unit 1010 may alternatively be a transceiver circuit (for example, may include a receiver circuit and a transmitter circuit), and the processing unit may be a processing circuit.

It should be noted that the apparatus in FIG. 9 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

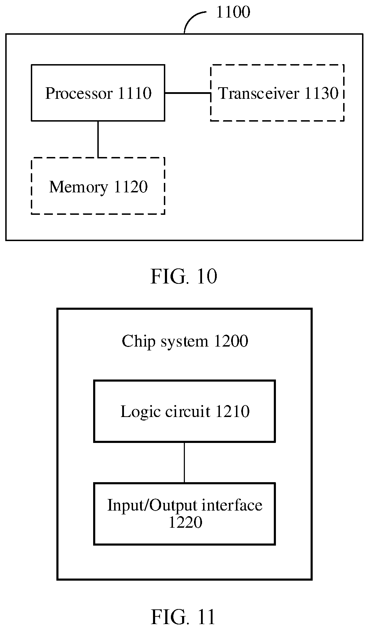

FIG. 10 is a diagram of another secure communication apparatus 1100 according to an embodiment of this application. The apparatus 1100 includes a processor 1110. The processor 1110 is coupled to a memory 1120. The memory 1120 is configured to store a computer program or instructions and/or data. The processor 1110 is configured to execute the computer program or the instructions stored in the memory 1120 or read the data stored in the memory 1120 to perform the methods in the foregoing method embodiments.

Optionally, there are one or more processors 1110.

Optionally, there are one or more memories 1120.

Optionally, the memory 1120 and the processor 1110 are integrated together or disposed separately.

Optionally, as shown in FIG. 10, the apparatus 1100 further includes a transceiver 1030. The transceiver 1030 is configured to receive and/or send a signal. For example, the processor 1110 is configured to control the transceiver 1030 to receive and/or send a signal.

In a solution, the apparatus 1100 is configured to implement operations performed by the first network element in the foregoing method embodiments.

For example, the processor 1110 is configured to execute the computer program or the instructions stored in the memory 1120 to implement related operations of the first network element in the foregoing method embodiments, for example, the method performed by the first network element or the NF in any one of the embodiments shown in FIG. 3 to FIG. 8.

In a solution, the apparatus 1100 is configured to implement operations performed by the network management network element in the foregoing method embodiments.

For example, the processor 1110 is configured to execute the computer program or the instructions stored in the memory 1120 to implement related operations of the network management network element in the foregoing method embodiments, for example, the method performed by the network management network element or the OAM in any one of the embodiments shown in FIG. 3 to FIG. 8.

In a solution, the apparatus 1100 is configured to implement operations performed by the certificate issuing network element in the foregoing method embodiments.

For example, the processor 1110 is configured to execute the computer program or the instructions stored in the memory 1120 to implement related operations of the certificate issuing network element in the foregoing method embodiments, for example, the method performed by the certificate authority or the CA in any one of the embodiments shown in FIG. 3 to FIG. 8.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example without limitation, the RAM includes a plurality of following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

FIG. 11 is a diagram of a chip system 1200 according to an embodiment of this application. The chip system 1200 (or may be referred to as a processing system) includes a logic circuit 1210 and an input/output interface (input/output interface) 1220.

The logic circuit 1210 may be a processing circuit in the chip system 1200. The logic circuit 1210 may be coupled and connected to a storage unit, and invoke instructions in the storage unit, so that the chip system 1200 can implement the methods and functions in the embodiments of this application. The input/output interface 1220 may be an input/output circuit in the chip system 1200, output information processed by the chip system 1200, or input to-be-processed data or signaling information to the chip system 1200 for processing.

Specifically, for example, if the chip system 1200 is installed on a first network element, the logic circuit 1210 is coupled to the input/output interface 1220, and the logic circuit 1210 may send a message to a network management network element or a certificate issuing network element through the input/output interface 1220, where the message may be generated by the logic circuit 1210; or the input/output interface 1220 may input first information from a network management network element or a certificate issuing network element to the logic circuit 1210 for processing. For another example, if the chip system 1200 is installed on the network management network element, the logic circuit 1210 is coupled to the input/output interface 1220, and the logic circuit 1210 may send the first information to the first network element or the certificate issuing network element through the input/output interface 1220, where the first information may be generated by the logic circuit 1210; or the input/output interface 1220 may input a message from the first network element or the certificate issuing network element to the logic circuit 1210 for processing. For another example, if the chip system 1200 is installed on the certificate issuing network element, the logic circuit 1210 is coupled to the input/output interface 1220, and the logic circuit 1210 may send the first information to the first network element or the network management network element by using the input/output interface 1220, where the first information may be generated by the logic circuit 1210, or the input/output interface 1220 may input a message from the first network element or the network management network element to the logic circuit 1210 for processing.

In a solution, the chip system 1200 is configured to implement operations performed by the first network element in the foregoing method embodiments.

For example, the logic circuit 1210 is configured to implement a processing-related operation performed by the first network element in the foregoing method embodiments, for example, a processing-related operation performed by the first network element or the NF in any one of the embodiments shown in FIG. 3 to FIG. 8. The input/output interface 1220 is configured to implement sending and/or receiving-related operations performed by the first network element in the foregoing method embodiments, for example, sending and/or receiving-related operations performed by the first network element or the NF in any one of the embodiments shown in FIG. 3 to FIG. 8.

In another solution, the chip system 1200 is configured to implement operations performed by the network management network element in the foregoing method embodiments.

For example, the logic circuit 1210 is configured to implement a processing-related operation performed by the network management network element in the foregoing method embodiments, for example, a processing-related operation performed by the network management network element or the OAM in any one of the embodiments shown in FIG. 3 to FIG. 8. The input/output interface 1220 is configured to implement sending and/or receiving-related operations performed by the network management network element in the foregoing method embodiments, for example, sending and/or receiving-related operations performed by the network management network element or the OAM in any one of the embodiments shown in FIG. 3 to FIG. 8.

In another solution, the chip system 1200 is configured to implement operations performed by the certificate issuing network element in the foregoing method embodiments.

For example, the logic circuit 1210 is configured to implement a processing-related operation performed by the certificate issuing network element in the foregoing method embodiments, for example, a processing-related operation performed by the certificate authority or the CA in any one of the embodiments shown in FIG. 3 to FIG. 8. The input/output interface 1220 is configured to implement sending and/or receiving-related operations performed by the certificate issuing network element in the foregoing method embodiments, for example, sending and/or receiving-related operations performed by the certificate authority or the CA in any one of the embodiments shown in FIG. 3 to FIG. 8.

An embodiment of this application further provides a computer-readable storage medium. The computer-readable storage medium stores computer instructions used to implement the method performed by the first network element, the network management network element, or the certificate issuing network element in the foregoing method embodiments.

For example, when the computer program is executed by a computer, the computer is enabled to implement the method performed by the first network element, the network management network element, or the certificate issuing network element in the foregoing method embodiments.

An embodiment of this application further provides a computer program product, including instructions. When the instructions are executed by a computer, the method performed by the first network element, the network management network element, or the certificate issuing network element in the foregoing method embodiments is implemented.

An embodiment of this application further provides a communication system. The communication system includes the first network element and the network management network element in the foregoing embodiments. For example, the system includes the first network element or the NF and the network management network element or the OAM in any one of the embodiments shown in FIG. 3 to FIG. 8.

Optionally, the communication system further includes a certificate issuing network element. For example, the system includes the certificate authority or the CA in any one of the embodiments shown in FIG. 3 to FIG. 8.

For explanations and beneficial effects of related content in any apparatus provided above, refer to the corresponding method embodiment provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When implemented by using software, all or some of the foregoing embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or transmitted from one computer-readable storage medium to another computer-readable storage medium. For example, the computer instructions may be transmitted from one network site, computer, server, or data center to another network site, computer, server, or data center in a wired (such as a coaxial cable, an optical fiber, or a digital subscriber line (DSL)) or wireless (such as infrared, wireless, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A secure communication method, comprising:
receiving, by a first network element, first information and a first signature from a network management network element, wherein the first signature is generated based on a private key of the network management network element and the first information, and the first information is used to describe the first network element;
sending, by the first network element, the first information and the first signature to a certificate issuing network element, wherein the first information is used to obtain a first certificate, and the first certificate is used to prove an identity of the first network element; and
receiving, by the first network element, the first certificate from the certificate issuing network element.

2. The method according to claim 1, wherein the first certificate comprises the first information.

3. The method according to claim 1 or 2, wherein the method further comprises: sending, by the first network element, first indication information to the certificate issuing network element, wherein the first indication information is used to obtain information used to verify the first signature.

4. The method according to any one of claims 1 to 3, wherein the method further comprises: sending, by the first network element, a type of the first certificate to the certificate issuing network element.

5. The method according to any one of claims 1 to 4, wherein the method further comprises:
sending, by the first network element, a public key of the first network element to the certificate issuing network element.

6. The method according to any one of claims 1 to 5, wherein the first information comprises at least one of the following: a first instance identifier, a first type, a first fully qualified domain name, a first internet protocol address, or a first public land mobile network identifier, the first instance identifier identifies the first network element, the first type indicates a type of the first network element, the first fully qualified domain name or the first internet protocol address indicates an address of the first network element, and the public land mobile network identifier indicates a network area in which the first network element is located.

7. The method according to any one of claims 1 to 6, wherein the method further comprises:
obtaining, by the first network element, second information, wherein the second information comprises at least one of the following: an identifier of the certificate issuing network element or first duration, the identifier of the certificate issuing network element is used to send the first information and the first signature to the certificate issuing network element, and the first duration indicates a validity period of the first certificate.

8. The method according to claim 7, wherein the method further comprises:
sending, by the first network element, the second information to the certificate issuing network element.

9. The method according to claim 7 or 8, wherein the second information is received from the network management network element, and that the first signature is generated based on a private key of the network management network element and the first information comprises:
the first signature is generated based on the private key of the network management network element, the first information, and the second information.

10. The method according to claim 7 or 8, wherein the method further comprises:
receiving, by the first network element, a second signature from the network management network element, wherein the second signature is generated based on the private key of the network management network element and the second information; and
sending, by the first network element, the second signature to the certificate issuing network element.

11. The method according to claim 10, wherein the method further comprises: sending, by the first network element, second indication information to the certificate issuing network element, wherein the second indication information is used to obtain information used to verify the second signature.

12. The method according to any one of claims 7 to 11, wherein the sending, by the first network element, the first information and the first signature to a certificate issuing network element comprises:
sending, by the first network element, the first information and the first signature to the certificate issuing network element based on the identifier of the certificate issuing network element.

13. The method according to any one of claims 1 to 6, wherein the method further comprises:
receiving, by the first network element, third information and a third signature from the network management network element, wherein the third signature is generated based on the private key of the network management network element and the third information, and the third information is used to describe the first network element;
sending, by the first network element, the third information and the third signature to the certificate issuing network element, wherein the third information is used to obtain a second certificate, and the second certificate is used to prove the identity of the first network element; and
receiving, by the first network element, the second certificate from the certificate issuing network element.

14. The method according to claim 13, wherein the method further comprises:
sending, by the first network element to the certificate issuing network element, information indicating that the first information is updated.

15. A secure communication method, comprising:
generating, by a network management network element, first information, wherein the first information is used to describe a first network element, the first information is used to obtain a first certificate, and the first certificate is used to prove an identity of the first network element;
generating, by the network management network element, a first signature based on a private key of the network management network element and the first information; and
sending, by the network management network element, the first information and the first signature to the first network element.

16. The method according to claim 15, wherein the first information comprises at least one of the following: a first instance identifier, a first type, a first fully qualified domain name, a first internet protocol address, or a first public land mobile network identifier, the first instance identifier identifies the first network element, the first type indicates a type of the first network element, the first fully qualified domain name or the first internet protocol address indicates an address of the first network element, and the public land mobile network identifier indicates a network area in which the first network element is located.

17. The method according to claim 15 or 16, wherein the method further comprises:
generating, by the network management network element, second information, wherein the second information comprises at least one of the following: an identifier of a certificate issuing network element or first duration, the identifier of the certificate issuing network element is used to send the first information and the first signature to the certificate issuing network element, and the first duration indicates a validity period of the first certificate; and
sending, by the network management network element, the second information to the first network element.

18. The method according to claim 17, wherein the generating, by the network management network element, a first signature based on a private key of the network management network element and the first information comprises:
generating, by the network management network element, the first signature based on the private key of the network management network element, the first information, and the second information.

19. The method according to claim 17, wherein the method further comprises:
generating, by the network management network element, a second signature based on the private key of the network management network element and the second information; and
sending, by the network management network element, the second signature to the first network element.

20. The method according to any one of claims 16 to 19, wherein the method further comprises:
determining, by the network management network element, the identifier of the certificate issuing network element based on the first type and/or the first public land mobile network identifier.

21. The method according to any one of claims 15 to 20, wherein the method further comprises:
generating, by the network management network element, third information, wherein the third information is used to describe the first network element, the third information is used to obtain a second certificate, and the second certificate is used to prove the identity of the first network element;
generating, by the network management network element, a third signature based on the private key of the network management network element and the third information; and
sending, by the network management network element, the third information and the third signature to the first network element.

22. A secure communication method, comprising:
receiving, by a certificate issuing network element, first information and a first signature from a first network element, wherein the first information is used to obtain a first certificate, the first information is used to describe the first network element, and the first certificate is used to prove an identity of the first network element;
verifying, by the certificate issuing network element, the first signature based on a public key of a network management network element and the first information; and
when verification of the first signature succeeds, sending, by the certificate issuing network element, the first certificate to the first network element based on the first information.

23. The method according to claim 22, wherein the method further comprises: generating, by the certificate authority, the first certificate based on the first information, wherein the first certificate comprises the first information.

24. The method according to claim 22 or 23, wherein the method further comprises:
receiving, by the certificate issuing network element, a type of the first certificate from the first network element; and
generating, by the certificate issuing network element, the first certificate based on the first information and the type.

25. The method according to any one of claims 22 to 24, wherein the method further comprises:
receiving, by the certificate issuing network element, first indication information from the first network element, wherein the first indication information is used to obtain information used to verify the first signature; and
obtaining, by the certificate issuing network element, the public key of the network management network element based on the first indication information.

26. The method according to any one of claims 22 to 25, wherein the method further comprises:
receiving, by the certificate issuing network element, a public key of the first network element from the first network element; and
generating, by the certificate issuing network element, the first certificate based on the first information and the public key of the first network element.

27. The method according to any one of claims 22 to 26, wherein the first information comprises at least one of the following: a first instance identifier, a first type, a first fully qualified domain name, a first internet protocol address, a first public land mobile network identifier, or a first network slice identifier, the first instance identifier identifies the first network element, the first type indicates a type of the first network element, the first fully qualified domain name or the first internet protocol address indicates an address of the first network element, the public land mobile network identifier indicates a network area in which the first network element is located, and the first network slice identifier indicates a network slice on which the first network element is located.

28. The method according to any one of claims 22 to 27, wherein the method further comprises:
receiving, by the certificate issuing network element, second information from the first network element, wherein the second information comprises at least one of the following: an identifier of the certificate issuing network element or first duration, the identifier of the certificate issuing network element is used to send the first information and the first signature to the certificate issuing network element, and the first duration indicates a validity period of the first certificate;
when the second information comprises the identifier of the certificate issuing network element, verifying, by the certificate issuing network element based on the identifier of the certificate issuing network element, whether the first network element is qualified to apply for the first certificate; or
when the second information comprises the first duration, determining, by the certificate issuing network element, the validity period of the first certificate based on the first duration.

29. The method according to claim 28, wherein the verifying, by the certificate issuing network element, the first signature based on a public key of the network management network element and the first information comprises:
verifying, by the certificate issuing network element, the first signature based on the public key of the network management network element, the first information, and the second information.

30. The method according to claim 28, wherein the method further comprises:
receiving, by the certificate issuing network element, a second signature from the first network element; and
verifying, by the certificate issuing network element, the second signature based on the public key of the network management network element and the second information.

31. The method according to claim 30, wherein the sending, by the certificate issuing network element, the first certificate to the first network element based on the first information comprises:
when verification of the second signature succeeds, sending, by the certificate issuing network element, the first certificate to the first network element based on the first information and the second information.

32. The method according to any one of claims 22 to 31, wherein the method further comprises:
receiving, by the certificate issuing network element, third information and a third signature from the first network element, wherein the third information is used to obtain a second certificate, the third information is used to describe the first network element, and the second certificate is used to prove the identity of the first network element;
verifying, by the certificate issuing network element, the third signature based on the public key of the network management network element and the third information; and
when verification succeeds, sending, by the certificate issuing network element, the second certificate to the first network element based on the first information and the third information.

33. The method according to claim 32, wherein the method further comprises: generating, by the certificate authority, the second certificate based on the first information and the third information.

34. The method according to claim 32 or 33, wherein the method further comprises:
receiving, by the certificate issuing network element from the first network element, information indicating that the first information is updated.

35. The method according to any one of claims 32 to 34, wherein the second certificate comprises the third information.

36. A communication apparatus, comprising:
a processor, configured to execute a computer program stored in a memory, so that the apparatus performs the method according to any one of claims 1 to 14, the method according to any one of claims 15 to 21, or the method according to any one of claims 22 to 35.

37. A communication apparatus, comprising:
a processor, configured to execute a computer program stored in a memory, so that the apparatus performs the method according to any one of claims 1 to 14, the method according to any one of claims 15 to 21, or the method according to any one of claims 22 to 35.

38. A computer-readable storage medium, wherein the computer-readable storage medium stores a computer program, and when the computer program is run on a computer, the computer is enabled to perform the method according to any one of claims 1 to 14, the method according to any one of claims 15 to 21, or the method according to any one of claims 22 to 35.

39. A computer program product, wherein the computer program product comprises instructions used to perform the method according to any one of claims 1 to 14, the method according to any one of claims 15 to 21, or the method according to any one of claims 22 to 35.

40. A communication system, comprising a terminal device and a network device, wherein
the terminal device is configured to perform the method according to any one of claims 1 to 14, and the network device is configured to perform the method according to any one of claims 15 to 21.
